(19) Europäisches Patentamt
European Patent Office
Office européen des brevets

(11) EP 4 598 170 A1

(12) **EUROPEAN PATENT APPLICATION**
published in accordance with Art. 153(4) EPC

(43) Date of publication:
**06.08.2025 Bulletin 2025/32**

(21) Application number: **23873203.6**

(22) Date of filing: **27.09.2023**

(51) International Patent Classification (IPC):
***H04W 64/00*** *(2009.01)* ***H04L 5/00*** *(2006.01)*
***H04W 8/24*** *(2009.01)* ***H04W 24/08*** *(2009.01)*
***H04B 17/20*** *(2015.01)*

(52) Cooperative Patent Classification (CPC):
**H04B 17/20; H04L 5/00; H04W 8/24; H04W 24/08; H04W 64/00**

(86) International application number:
**PCT/KR2023/015020**

(87) International publication number:
**WO 2024/072094 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.09.2022 US 202263411626 P**

(71) Applicant: **LG Electronics Inc.**
**Yeongdeungpo-gu**
**Seoul 07336 (KR)**

(72) Inventors:
- **HWANG, Seunggye**
**Seoul 06772 (KR)**
- **KO, Hyunsoo**
**Seoul 06772 (KR)**
- **SHIM, Jaenam**
**Seoul 06772 (KR)**
- **KIM, Kijun**
**Seoul 06772 (KR)**
- **KO, Woosuk**
**Seoul 06772 (KR)**

(74) Representative: **Plasseraud IP**
**104 Rue de Richelieu**
**CS92104**
**75080 Paris Cedex 02 (FR)**

(54) **METHOD AND DEVICE FOR TRANSMITTING AND RECEIVING WIRELESS SIGNAL IN WIRELESS COMMUNICATION SYSTEM**

(57) A method for a first apparatus to perform positioning-related measurement in a wireless communication system according to at least one of the examples disclosed herein may involve: transmitting apparatus capability information informing that the first apparatus can operate as a positioning reference unit (PRU) providing a positioning reference location; receiving configuration information about measurement that the first apparatus is to perform as the PRU; and reporting, to a network, the measurement performed by the PRU on the basis of the configuration information, wherein measurement reporting is performed for all of the reference signal resources included in the configuration information on the basis that the first apparatus operates as the PRU, and the measurement reporting for all of the reference signal resources includes information about reference signal resources for which measurement failed.

**FIG. 13**

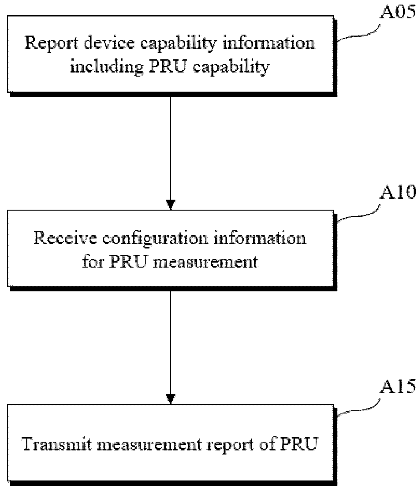


EP 4 598 170 A1

## Description

### TECHNICAL FIELD

The present disclosure relates to a wireless communication system, and more particularly, to a method and apparatus for transmitting and receiving a wireless signal.

### BACKGROUND

Generally, a wireless communication system is developing to diversely cover a wide range to provide such a communication service as an audio communication service, a data communication service, and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

### DISCLOSURE

### TECHNICAL PROBLEM

An object of the present disclosure is to provide a method of efficiently performing wireless signal transmission/reception procedures and an apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

### TECHNICAL SOLUTION

In an aspect of the present disclosure, provided herein is a method of performing positioning-related measurement by a first device in a wireless communication system. The method may include: transmitting, to a network, device capability information for informing that the first device can operate as a positioning reference unit (PRU) that provides a reference position for positioning; receiving configuration information regarding measurement to be performed by the first device as the PRU; and reporting the measurement of the PRU performed based on the configuration information to the network. Based on that the first device operates as the PRU, measurement reporting may be performed for all reference signal resources included in the configuration information, and the measurement reporting for all the reference signal resources may include information regarding a reference signal resource where a measurement failure occurs.

The information regarding the reference signal where the measurement failure occurs may include at least one of a measurement failure indication and a measurement failure cause.

The measurement reporting for all the reference signal resources may include phase measurement values for remaining reference signal resources except for the reference signal resource where the measurement failure occurs. Each phase measurement value may be expressed as mod $(2\pi fc\, \tau 0, 2\pi)$, where fc denotes a carrier frequency, $\tau 0$ denotes a propagation delay of a reference signal, and mod denotes a modulo operation.

The configuration information may include information regarding a measurement time duration of the PRU and information regarding a resource set for all the reference signal resources.

The measurement of the PRU may include carrier phase measurement (CPM) for positioning of a target user equipment (UE).

A location of the PRU may be known to the network, and the CPM of the PRU may be related to correction of a CPM error of the target UE.

The measurement of the PRU may further include a different type of measurement from the CPM. The different type of measurement may be related to at least one of Time of Arrival (ToA), Time Difference of Arrival (TDOA), Subcarrier Phase Measurement (ScPM), Angle of Departure (AoD), or Angle of Arrival (AoA).

The reference signal resources are downlink positioning reference signal (PRS) resources, and the first device may be a UE.

In another aspect of the present disclosure, provided herein is a computer-readable recording medium having recorded thereon a program for executing the aforementioned signal measurement method.

In another aspect of the present disclosure, provided herein is a first device configured to perform the aforementioned signal measurement method.

The first device may further include a transceiver, and the first device may be a UE operating in a wireless communication system.

The first device may be a processing device configured to control a UE operating in a wireless communication system.

In another aspect of the present disclosure, provided herein is a method of receiving, by a second device, a measurement report from a first device in a wireless communication system. The method may include: receiving, from the first device, device capability information informing that the first device can operate as a PRU that provides a reference position for positioning; transmitting configuration information regarding measurement to be performed by the first device as the PRU; and receiving a measurement report of the PRU performed based on the configuration information from the first device. The measurement report of the PRU may include measurement results for all reference signal resources included in the configuration information, and the measurement results for all the reference signal resources may include information regarding a reference signal resource where a measurement failure occurs.

In a further aspect of the present disclosure, provided herein is a second device configured to perform reception of the aforementioned measurement report.

ADVANTAGEOUS EFFECTS

According to an embodiment of the present disclosure, wireless signal transmission/reception procedures can be performed accurately and efficiently.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

## BRIEF DESCRIPTION OF THE DRAWINGS

FIG. 1 illustrates physical channels used in a 3rd generation partnership project (3GPP) system as an exemplary wireless communication system, and a general signal transmission method using the same.

FIG. 2 illustrates a radio frame structure.

FIG. 3 illustrates a resource grid of a slot.

FIG. 4 illustrates exemplary mapping of physical channels in a slot. FIG. 1 illustrates physical channels used in a 3rd generation partnership project (3GPP) system as an exemplary wireless communication system, and a general signal transmission method using the same.

FIG. 2 illustrates a radio frame structure.

FIG. 3 illustrates a resource grid of a slot.

FIG. 4 illustrates exemplary mapping of physical channels in a slot

FIG. 5 illustrates an exemplary physical downlink shared channel (PDSCH) reception and acknowledgement/negative acknowledgement (ACK/NACK) transmission process.

FIG. 6 illustrates an exemplary physical uplink shared channel (PUSCH) transmission process.

FIG. 7 illustrates an example of setting a positioning protocol.

FIG. 8 illustrates an example of OTDOA.

FIG. 9 illustrates an example of Multi RTT.

FIG. 10 illustrates a procedure for an operation of a network node (e.g., an upper node of a UE or an LMF) according to an embodiment.

FIG. 11 illustrates a procedure of an operation of a UE that performs positioning measurement.

FIG. 12 is a diagram for explaining an operation of a UE and a network according to an embodiment.

FIG. 13 is a diagram for explaining an operation of a first device according to an embodiment.

FIG. 14 is a diagram for explaining an operation of a second device according to an embodiment.

FIGS. 15 to 18 illustrate an example of a communication system 1 and wireless devices applicable to the present disclosure.

## DETAILED DESCRIPTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In an embodiment of the present disclosure, for simplicity, this technology will be referred to as NR (New Radio or New RAT).

For the sake of clarity, 3GPP NR is mainly described, but the technical idea of the present disclosure is not limited thereto.

For the background art relevant to the present disclosure, the definitions of terms, and abbreviations, the following documents may be incorporated by reference.

- 38.211: Physical channels and modulation
- 38.212: Multiplexing and channel coding
- 38.213: Physical layer procedures for control
- 38.214: Physical layer procedures for data
- 38.215: Physical layer measurements
- 38.300: NR and NG-RAN Overall Description
- 38.304: User Equipment (UE) procedures in idle mode and in RRC Inactive state
- 38.321Medium Access Control (MAC) protocol specification
- 38.331: Radio Resource Control (RRC) protocol specification
- 37.213: Introduction of channel access procedures to unlicensed spectrum for NR-based access
- 36.355: LTE Positioning Protocol
- 37.355: LTE Positioning Protocol

Terms and Abbreviations

- 5GC: 5G Core Network
- 5GS: 5G System
- AoA: Angle of Arrival
- AP: Access Point
- CID: Cell ID
- E-CID: Enhanced Cell ID
- GNSS: Global Navigation Satellite System
- GPS: Global Positioning System
- LCS: LoCation Service
- LMF: Location Management Function
- LPP: LTE Positioning Protocol
- MO-LR: Mobile Originated Location Request
- MT-LR: Mobile Terminated Location Request
- NRPPa: NR Positioning Protocol A
- OTDOA: Observed Time Difference Of Arrival
- PDU: Protocol Data Unit
- PRS: Positioning Reference Signal
- RRM: Radio Resource Management
- RSSI: Received Signal Strength Indicator
- RSTD: Reference Signal Time Difference

- ToA: Time of Arrival
- TP: Transmission Point
- TRP: Transmission and Reception Point
- UE: User Equipment
- SS: Search Space
- CSS: Common Search Space
- USS: UE-specific Search Space
- PDCCH: Physical Downlink Control Channel
- PDSCH: Physical Downlink Shared Channel;
- PUCCH: Physical Uplink Control Channel;
- PUSCH: Physical Uplink Shared Channel;
- DCI: Downlink Control Information
- UCI: Uplink Control Information
- SI: System Information
- SIB: System Information Block
- MIB: Master Information Block
- RRC: Radio Resource Control
- DRX: Discontinuous Reception
- RNTI: Radio Network Temporary Identifier
- CSI: Channel state information
- PCell: Primary Cell
- SCell: Secondary Cell
- PSCell: Primary SCG(Secondary Cell Group) Cell
- CA: Carrier Aggregation
- WUS: Wake up Signal
- TX: Transmitter
- RX: Receiver
- RSTD: Reference Signal Time Difference
- RS: Reference Signal
- PRS: Positioning Reference Signal
- SRS: Sounding Reference Signal

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| $N^{slot}_{symb}$: Number of symbols in a slot<br>$N^{frame,u}_{slot}$: Number of slots in a frame<br>$N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

FIG. 4 illustrates an example of mapping physical channels in a slot. In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

FIG. 5 illustrates an exemplary PDSCH reception and ACK/NACK transmission process. Referring to FIG. 5, the UE may detect a PDCCH in slot #n. The PDCCH includes DL scheduling information (e.g., DCI format 1_0 or DCI format 1_1), and indicates a DL assignment-to-PDSCH offset, K0 and a PDSCH-HARQ-ACK reporting offset, K1. After receiving a PDSCH in slot #(n+K0) according to the scheduling information of slot #n, the UE may transmit UCI on a PUCCH in slot # (n+K1). The UCI may include an HARQ-ACK response to the PDSCH. In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). The UE may then transmit a PUSCH in slot #(n+K2) according to the scheduling information in slot #n. The PUSCH includes a UL-SCH TB.

## Positioning

Positioning may refer to determining the geographical position and/or velocity of the UE based on measurement of radio signals. Location information may be requested by and reported to a client (e.g., an application) associated with to the UE. The location information may also be requested by a client within or connected to a core network. The location information may be reported in standard formats such as formats for cell-based or geographical coordinates, together with estimated errors of the position and velocity of the UE and/or a positioning method used for positioning.

FIG. 7 is a diagram illustrating an exemplary positioning protocol configuration for positioning a UE, to which various embodiments are applicable.

Referring to FIG. 7, an LTE positioning protocol (LPP) may be used as a point-to-point protocol between a location server (E-SMLC and/or SLP and/or LMF) and a target device (UE and/or SET), for positioning the target device using position-related measurements obtained from one or more reference resources. The target device and the location server may exchange measurements and/or location information based on signal A and/or signal B over the LPP.

NRPPa may be used for information exchange between a reference source (access node and/or BS and/or TP and/or NG-RAN node) and the location server.

The NRPPa protocol may provide the following functions.

- E-CID Location Information Transfer. This function allows the reference source to exchange location information with the LMF for the purpose of E-CID positioning.
- OTDOA Information Transfer. This function allows the reference source to exchange information with the LMF for the purpose of OTDOA positioning.
- Reporting of General Error Situations. This function allows reporting of general error situations, for which function-specific error messages have not been defined.

Positioning methods supported in the NG-RAN may include a GNSS, an OTDOA, an E-CID, barometric sensor positioning, WLAN positioning, Bluetooth positioning, a TBS, uplink time difference of arrival (UTDOA) etc. Although any one of the positioning methods may be used for UE positioning, two or more positioning methods may be used for UE positioning.

### OTDOA (Observed Time Difference Of Arrival)

FIG. 8 is a diagram illustrating an observed time difference of arrival (OTDOA) positioning method, to which various embodiments are applicable;

The OTDOA positioning method uses time measured for DL signals received from multiple TPs including an eNB, an ng-eNB, and a PRS-only TP by the UE. The UE measures time of received DL signals using location assistance data received from a location server. The position of the UE may be determined based on such a measurement result and geographical coordinates of neighboring TPs.

The UE connected to the gNB may request measurement gaps to perform OTDOA measurement from a TP. If the UE is not aware of an SFN of at least one TP in OTDOA assistance data, the UE may use autonomous gaps to obtain an SFN of an OTDOA reference cell prior to requesting measurement gaps for performing reference signal time difference (RSTD) measurement.

Here, the RSTD may be defined as the smallest relative time difference between two subframe boundaries received from a reference cell and a measurement cell. That is, the RSTD may be calculated as the relative time difference between the start time of a subframe received from the measurement cell and the start time of a subframe from the reference cell that is closest to the subframe received from the measurement cell. The reference cell may be selected by the UE.

For accurate OTDOA measurement, it is necessary to measure time of arrival (ToA) of signals received from geographically distributed three or more TPs or BSs. For example, ToA for each of TP 1, TP 2, and TP 3 may be measured, and RSTD for TP 1 and TP 2, RSTD for TP 2 and TP 3, and RSTD for TP 3 and TP 1 are calculated based on three ToA values. A geometric hyperbola is determined based on the calculated RSTD values and a point at which curves of the hyperbola cross may be estimated as the position of the UE. In this case, accuracy and/or uncertainty for each ToA measurement may occur and the estimated position of the UE may be known as a specific range according to measurement uncertainty.

For example, RSTD for two TPs may be calculated based on Equation 1 below.

[Equation 1]

$$RSTDi_{,1} = \frac{\sqrt{(x_t-x_i)^2+(y_t-y_i)^2}}{c} - \frac{\sqrt{(x_t-x_1)^2+(y_t-y_1)^2}}{c} + (T_i-T_1)+(n_i-n_1)$$

In Equation 1, c is the speed of light, $\{x_t, y_t\}$ are (unknown) coordinates of a target UE, $\{x_i, y_i\}$ are (known) coordinates of a TP, and $\{x_1, y_1\}$ are coordinates of a reference TP (or another TP). Here, $(T_i-T_1)$ is a transmission time offset between two TPs, referred to as "real time differences" (RTDs), and $n_i$ and $n_1$ are UE ToA measurement error values.

E-CID (Enhanced Cell ID)

In a cell ID (CID) positioning method, the position of the UE may be measured based on geographical information of a serving ng-eNB, a serving gNB, and/or a serving cell of the UE. For example, the geographical information of the serving ng-eNB, the serving gNB, and/or the serving cell may be acquired by paging, registration, etc.

The E-CID positioning method may use additional UE measurement and/or NG-RAN radio resources in order to improve UE location estimation in addition to the CID positioning method. Although the E-CID positioning method partially may utilize the same measurement methods as a measurement control system on an RRC protocol, additional measurement only for UE location measurement is not generally performed. In other words, an additional measurement configuration or measurement control message may not be provided for UE location measurement. The UE does not expect that an additional measurement operation only for location measurement will be requested and the UE may report a measurement value obtained by generally measurable methods.

For example, the serving gNB may implement the E-CID positioning method using an E-UTRA measurement value provided by the UE.

Measurement elements usable for E-CID positioning may be, for example, as follows.

UE measurement: E-UTRA reference signal received power (RSRP), E-UTRA reference signal received quality (RSRQ), UE E-UTRA reception (Rx)-transmission (Tx) time difference, GERAN/WLAN reference signal strength indication (RSSI), UTRAN common pilot channel (CPICH) received signal code power (RSCP), and/or UTRAN CPICH Ec/Io

E-UTRAN measurement: ng-eNB Rx-Tx time difference, timing advance ($T_{ADV}$), and/or AoA

Here, $T_{ADV}$ may be divided into Type 1 and Type 2 as follows.

$$T_{ADV} \text{ Type 1} = (\text{ng-eNB Rx-Tx time difference}) + (\text{UE E-UTRA Rx-Tx time difference})$$

$$T_{ADV} \text{ Type 2} = \text{ng-eNB Rx-Tx time difference}$$

AoA may be used to measure the direction of the UE. AoA is defined as the estimated angle of the UE counterclockwise from the eNB/TP. In this case, a geographical reference direction may be north. The eNB/TP may use a UL signal such as an SRS and/or a DMRS for AoA measurement. The accuracy of measurement of AoA increases as the arrangement of an antenna array increases. When antenna arrays are arranged at the same interval, signals received at adjacent antenna elements may have constant phase rotate.

UTDOA (Uplink Time Difference of Arrival)

UTDOA is a method of determining the location of a UE by estimating the arrival time of the SRS. When calculating the estimated SRS arrival time, the location of the UE can be estimated through an arrival time difference with another cell (or base station/TP) by using the serving cell as a reference cell. To implement UTDOA, the E-SMLC may indicate a serving cell of the target UE in order to instruct the target UE to transmit SRS. In addition, E-SMLC can provide configuration such as periodic/aperiodic SRS, bandwidth and frequency/group/sequence hopping.

Multi RTT (round trip time)

FIG. 9 is a diagram illustrating an exemplary multi-round trip time (multi-RTT) positioning method to which various embodiments are applicable.

Referring to FIG. 9(a), an exemplary RTT procedure is illustrated, in which an initiating device and a responding device perform ToA measurements, and the responding device provides ToA measurements to the initiating device, for RTT measurement (calculation). The initiating device may be a TRP and/or a UE, and the responding device may be a UE and/or a TRP.

The initiating device may transmit an RTT measurement request, and the responding device may receive the RTT measurement request (1301).

The initiating device may transmit an RTT measurement signal at $t_0$ and the responding device may acquire a ToA measurement t1(1303).

The responding device may transmit an RTT measurement signal at t2 and the initiating device may acquire a ToA measurement t3 (1305).

The responding device may transmit information about [t2-t1], and the initiating device may receive the information and calculate an RTT by Equation 2 (1307). The information may be transmitted and received based on a separate signal or in the RTT measurement signal (1305).

[Equation 2]

$$\text{RTT} = t_3 - t_0 - [t_2 - t_1]$$

Referring to FIG. 9(b), an RTT may correspond to a double-range measurement between two devices. Positioning estimation may be performed from the corresponding information, and multilateration may be used for the positioning estimation. $d_1$, $d_2$, and $d_3$ may be determined based on the measured RTT, and the location of a target device may be determined to be the intersection of the circumferences of circles with radiuses of $d_1$, $d_2$, and $d_3$, in which $BS_1$, $BS_2$, and $BS_3$ (or TRPs) are centered, respectively.

NG-RAN positioning architecture and procedures

FIG. 10 illustrates a positioning structure of a next generation (NG) radio access network (RAN). The NG RAN may be referred to as a NR RAN or 5G RAN.

An AMF may receive a request for location services related to a specific target UE from other entities (e.g., gateway mobile location centre (GMLC) or UE), or the AMF itself may determine to initiate the location services on behalf of the specific target UE (e.g., in the case of IP multimedia subsystem (IMS) emergency calls). Subsequently, the AMF may forward the location service request to an LMF. The LMF may process the location service request, where processing the location service request may include transmitting assistance data to the target UE for UE-based and/or UE-assisted positioning and/or positioning of the target UE. The LMF transmits location service results (e.g., location estimates for the UE) to the AMF. In the case of location services requested by an entity other than the AMF (e.g., GMLC or UE), the AMF forwards the location service result to the corresponding entity.

An NG-RAN node may control TRPs/TPs, such as RRM or DL-PRS only TPs, to support a PRS-based terrestrial beacon system (TBS).

The LMF may be connected to an enhanced serving mobile location centre (E-SMLC) to access universal terrestrial radio access network (UTRAN) information.

The LMF may be connected to a secure user plane location (SUPL) location platform (SLP), which is responsible for positioning in the user plane.

FIG. 11 illustrates an example of location services supported by an NG-RAN.

When a UE is in a connection management idle (CM-IDLE) state, if an AMF receives a location service request, the AMF performs a network-triggered service request to configure signaling for a connection to the UE and allocation of a specific serving gNB/ng-eNB. In FIG. 11, it is assumed that the UE is in the connected mode.

A location service request for the UE may be triggered, and the request may be one of steps 1101, 1102, or 1103. For example, an entity in a 5GC such as a GMLC may request location services (e.g., positioning) for a target UE from a serving AMF (1101). Alternatively, the serving AMF may trigger location services (e.g., to find the UE for emergency calls) for the target UE itself (1102). Further, the UE may request location services (e.g., positioning or assistance data transfer) from the serving AMF at the NAS level (1103).

The AMF forwards the location service request to an LMF (1104).

The LMF provides services in the NG-RAN to acquire location measurements or assistance data and initiates a positioning procedure with a neighboring ng-eNB/gNB (1105).

(Instead of or in addition to step 1105) The LMF initiates the positioning procedure with the UE to obtain location estimates or positioning measurements or transmit location assistance data to the UE (1106).

The LMF provides a location service response to the AMF (1107) (e.g., success or failure and, if requested and obtained, location estimates for the UE).

(In step 1101) The AMF provides the location service response to the 5GC entity (1108) (e.g., location estimates for the UE).

(In step 1102) The AMF supports the services triggered in step 1102 based on the location service response received in step 1107 (1109) (e.g., providing location estimates related to emergency calls to the GMLC).

(In step 1103) The AMF provides the location service response to the UE (1110) (e.g., location estimates for the UE).

**Carrier Phase Measurement (CPM) Assistance**

In NR, various techniques may be used to perform positioning. As mentioned above, timing-based methods (e.g., DL-TDOA (Downlink Time Difference of Arrival), UL-RTOA (Uplink Round-Trip Time of Arrival), Multi RTT), angle-based methods (e.g., AoA, AoD), and cell ID-based methods (e.g., E-CID) may be used.

In addition, Rel-18 discusses support for carrier phase measurement-based positioning methods (i.e., NR carrier phase measurement). In CPM-based positioning, to measure the propagation delay of an RS caused by the distance between the BS and UE, a method of performing and utilizing phase measurement based on the carrier frequency of a received signal is being discussed.

In CPM-based positioning, positioning is performed based on phase changes in the phase domain, which improves positioning accuracy. On the other hand, unlike other time-domain positioning techniques, positioning accuracy may be significantly affected by the phase change, and thus it is necessary to consider the impact of phase errors. The phase value at the k-th subcarrier measured at the receiver for an RS may be expressed as shown in Equation 3.

[Equation 3]

$$\Phi_k=\Phi_{tx}-\Phi_{rx}-2\pi(f_c+k\Delta f)*\tau_0+\eta_k$$

In Equation 3, $\Phi_k$ refers to a phase value measured at the k-th subcarrier, and $f_c$ and $\Delta f$ represent a carrier frequency and a subcarrier spacing used for transmitting an RS, respectively. In addition, $\tau_0$ represents a propagation delay, which is the time taken for the RS transmitted from the transmitter to be received at the receiver, and $\eta_k$ represents a noise value caused by additive white Gaussian noise (AWGN) and multipath effects at the receiver.

In this case, $\Phi_{tx}$ and $\Phi_{rx}$ represent initial phase error values occurring at the transmitter and receiver, respectively. The initial phase errors are common phase error values occurring across the entire bandwidth of the received RS. The initial phase errors are caused by the physical characteristics of components and devices in the transmitter and receiver, which makes prediction and modeling difficult.

The impact of such initial phase errors affects the performance of CPM-based positioning and thus needs to be removed. To this end, a differencing technique may be used in CPM-based positioning systems. The differencing technique removes common error values by using the difference between two or more phase measurements with the same error. For this, the two or more measurements need to be measured at the same timing.

For example, in the case of initial phase errors occurring at the receiver, the initial phase errors may be removed by using the difference between two measurements measured at the same time by the same receiver. In the case of initial phase errors occurring at the transmitter, the initial phase errors may be removed by using the difference between measurements measured at two different receivers for an RS transmitted from the same transmitter.

In this case, to remove the initial phase errors at the transmitter, precise or known location information on at least one UE/device is required. To this end, the use of a positioning reference unit (PRU) is considered.

The PRU is a device/node with a known location that performs positioning measurements (e.g., RSTD, RSRP, UE Rx-Tx time difference measurements, etc.) and may report the measurements to the location server. Additionally, the PRU transmits an SRS to allow TRPs to measure the SRS from the PRU with the known location and report UL measurements (e.g., RTOA, UL-AoA, gNB Rx-Tx time difference, etc.). The measurements by the PRU may be compared with prediction of PRU measurements for a known location by the location server. The comparison may be used to obtain information for calibrating the position measurements of nearby target devices. The obtained information for position measurement calibration may be used to correct DL/UL position measurements for other target devices.

From the perspective of the location server, a UE with a known location may function as the PRU.

When the PRU is used for NR CPM positioning, as mentioned above, the UE and PRU need to measure the phase value for an RS transmitted from the same transmitter at the same time and for the same TRP (or PRS resource). If the UE and PRU autonomously select the RS and time point to be measured, similar to existing positioning techniques, it may be disadvantageous for guaranteeing the CPM positioning performance since it is difficult to eliminate the same initial phase error. To this end, agreed operations between the UE and PRU may be necessary.

On the other hand, from the perspective of a network, a target UE and a PRU, which are subject to positioning, have various different characteristics.

- Generally, a method in which a higher node pre-estimates the channel environment of a target UE, which is subject to positioning, and determines/indicates the time point and target (resources) of an RS to be received may not be suitable. Therefore, the current 3GPP NR positioning techniques provide a PRS list that the UE is capable of receiving, and the UE selects appropriate PRSs from the PRS list according to the reception conditions thereof and measures and reports the PRSs. Considering the positioning characteristics of the UE, even in future scenarios where CPM-based positioning technology is supported, there may be RS (configuration) selection by the UE.
- In contrast to the UE, since the PRU is generally assumed to have a (fixed) known location, the variation in PRU measurement performance may be less sensitive to time-varying channel characteristics. Therefore, in most cases, the higher node may identify/select an appropriate time point and/or RS (configuration) for PRU measurement, which is different from the UE.
- While the measurement report of the UE is primarily for accurate positioning thereof, the PRU, which is a UE with special capabilities/purpose, needs to be considered in that the PRU measurement/report is primarily aimed at improving positioning accuracy for other UEs (in addition to positioning of the PRU).
- Additionally, an efficient design of PRU operations considering implementation complexity and power efficiency may be required.

Considering the aforementioned characteristics/issues/requirements, the present disclosure proposes operations of the PRU related to CPM-based positioning and related network signaling methods.

In the present disclosure, the proposed methods are primarily described based on CPM-based positioning techniques using the 3GPP NR system as a reference, but the present disclosure is not limited thereto. The proposed methods may also be applied to other positioning techniques capable of estimating the distance or direction between the transmitter and UE to determine positioning. Therefore, the proposed methods may be applied to all types of transmission and reception methods and positioning techniques expected by the BS and UE. Additionally, the proposed methods are not limited to the use of the PRU. Since the phase may be measured by measuring an RS, the methods may be applied to devices where location information may be used. Additionally, the role of the PRU may be replaced by devices such as the BS or UE.

For convenience, it is assumed that the transmitter is the BS and the receiver is the UE. Considering a structure where the BS transmits a PRS and the UE receives the PRS, the proposed methods will be described on the assumption that the UE performs an operation of measuring the phase based on the received PRS and reports the results of the calculated phase measurement to a higher node (e.g., LMF or BS). However, the proposed methods may also be applied when the transmitter is the UE and the receiver is the BS, or when both the transmitter and receiver are the UE (or BS). The methods may also be applied when the RS used for transmission and phase measurement is an SRS or SL PRS.

The proposed methods may be implemented as a combination of one or more methods or independently without combination. Some terms, symbols, or orders used may be replaced with other terms, symbols, or orders as long as the principles of the present disclosure are maintained.

To support CPM-based positioning, the present disclosure proposes methods in which a network node (e.g., a higher node such as a BS/TRP or LMF) configures/indicates the function of a PRU to another node (e.g., a device with a known location such as a UE/TRP with the PRU function), and the other node performs the configured/indicated PRU function/operation. Additionally, the present disclosure proposes methods in which the other node, which performs the role of the PRU or has the capability therefor, generates and reports information for the purpose of supporting CPM-based positioning. For convenience, the network node is referred to as the higher node, and the other node is assumed to be a PRU UE, but the present disclosure is not limited thereto.

**[Proposal 1] Measurement-related configuration information and operations of PRU for supporting CPM-based positioning**

Proposed is a method in which the PRU receives information related to CPM-based positioning support from the higher node (e.g., BS or LMF) and receives the PRS based on the information. The information related to CPM-based positioning support may be provided through an SIB (e.g., positioning-related SIB) transmitted by the BS or RRC (e.g., UE dedicated RRC signaling), or the information may be transmitted through an LPP provided by the LMF.

Information and configuration methods related to CPM-based positioning support

Information related to reception of a target PRS measured by the PRU may be included as one piece of information related to CPM-based positioning support. In this case, the PRS reception-related information may include information specifying the measurement target PRS. The target PRS may be specified based on the 3GPP NR standard in units such as a positioning frequency layer, TRP, PRS resource set, and/or PRS resource. For example, the PRU UE may receive configuration information on all PRSs expected to be received based on configuration information received from the higher node. In this case, the configuration information on all PRS may be the same as that for general UEs that do not perform the PRU function. In addition to the configuration information for all PRS, the PRU UE may receive configuration information on a list of PRS that is used to support CPM-based positioning. The list of PRS may be expressed using the IDs of the positioning frequency layer, TRP, PRS resource set, and/or PRS resource.

Information on the measurement time point of the PRU may be included as one piece of information related to CPM-based positioning support. In this case, the information on the measurement time point of the PRU may be provided in the form of a measurement gap (MG) or prs processing window (PRW), or the information may be in the form of a separately configured time duration. At least one piece of configuration information on the measurement time point may be configured. For example, the PRU UE may be configured with multiple MGs and/or PPWs. When the PRU UE is configured with information on multiple measurement time points, the PRU UE may perform PRS measurement for all the time durations, or the PRU UE may perform measurement as the PRU at the locations of the time durations that are selected/configured.

The two types of information related to CPM-based positioning support proposed above may be configured individually or designed to have an associated configuration relationship. For example, when the time duration such as the MG or PPW are configured for CPM-based positioning, information on the measurement target PRS may be provided together within the configured time duration.

The information related to CPM-based positioning support provided to the PRU specifies the measurement time point and target TRP (or PRS) of the PRU, thereby providing a useful structure for performing differencing in the measurement of the target UE for CPM-based positioning. If the configuration information is not provided separately, the PRU may perform measurement based on an arbitrarily selected reception time point and TRP (or PRS), similar to the positioning method of the general UE. In this case, the reception time point and TRP (or PRS) selected by the UE may not match the reception time points and TRP (or PRS) selected by the UE that requires differencing support, which may be disadvantageous for improving positioning accuracy based on phase error cancellation.

PRS reception by PRU UE upon receiving information related to CPM-based positioning support

When the UE is instructed to perform PRU operations, after receiving information related to CPM-based positioning support, the UE may receive a PRS based on the information and report the results.

As a specific method for operations of the UE instructed to perform the PRU operations, the UE may perform PRS measurement for all the time durations configured and indicated through the information related to CPM-based positioning support and report the results. This means that the UE is not allowed to arbitrarily skip measurements or reports for some of the configured time durations. For example, for measurement time points designated for CPM purposes in the form of an MG (or PPW), the UE may measure the PRS at all the locations of MGs (or PPWs) that are periodically repeated and then report the results. The measurement reporting may be performed based on at least one of the following options.

Option A-1) The PRU UE may provide individual measurement reports for each MG (or PPW) that the PRU UE measures. In this case, the report may be transmitted over a PUSCH scheduled via a PDCCH in a search space that is monitored periodically, or the report may be transmitted on PUSCH resources that are transmitted periodically. The time domain resources of the periodic search space or PUSCH may have the same periodicity as the MG (or PPW), which may also be specified by the size of an offset calculated from the position where each MG (or PPW) ends (or starts).

Option A-2) The PRU UE may report measurements for multiple MGs (or PPWs) on a single UL resource. In this case, the report may be transmitted over a PUSCH scheduled via a PDCCH in a periodically monitored search space, or the report may be transmitted on periodically transmitted PUSCH resources. The time domain resources of the periodic search space or PUSCH may be set as a multiple of the periodicity of the MG (or PPW), and the measurement results, which are transmitted in a bundled form, may be specified by the size of an offset calculated from the position where the last measured MG (or PPW) ends (or starts). In this case, to differentiate between different measurement reports transmitted on the same PUSCH, each measurement report may include information about an MG in which the measurement is performed. For example, the information about the MG may be the time-domain order of the MGs corresponding to the bundled measurement reports, or information on the indices of slots (or frames) included in each MG (e.g., slot index and/or SFN) may be included in each measurement report value.

As a specific method for operations of the UE instructed to perform the PRU operations, the UE may perform measurement for all the PRS resources (e.g., a set of PRS configured/indicated in units such as a positioning frequency layer, TRP, PRS resource set, and/or PRS resource) configured and indicated through the information related to CPM-based positioning support and report the results. This means that the UE is not allowed to arbitrarily skip measurements or reports for some of the configured PRS resources. For example, for PRSs for CPM purposes configured/indicated in units of the TRP (or PRS resource (set)), the UE may perform measurement at all the locations of the periodically repeating MG (or PPW) and report the results.

As described above, it may generally be assumed that the PRU UE has a fixed location. Therefore, it may be assumed that the channel environment of the PRU (particularly the large-scale fading channel) does not vary significantly over time. However, it is necessary to consider the possibility of changes in the channel environment of the PRU in case of special situations. For example, a specific TRP (or PRS resource) that the PRU is configured/instructed to measure may fail due to internal/external factors. In the case of general UEs and positioning techniques, there is no need to provide a separate report for a TRP (or PRS resource) where the measurement fails. However, in the case of PRU UEs, where measurement and reporting for a designated TRP (or PRS resource) are mandatory, it may not be appropriate for the UEs to skip the report based on the judgment thereof. Considering such situations, if the measurement for a specific designated TRP (or PRS resource) fails, the UE may provide information indicating the failure of the measurement to the higher node. For example, the UE may transmit failure indication information instead of reporting the measurement value for the TRP (or PRS resource) where the measurement fails. Alternatively, in measurement report fields that represent phase values (or other positioning-related measurements), specific values may be configured to provide information about the measurement failure and/or failure factors instead of representing the actual values. In another example, the UE may be configured to skip the measurement for a specific TRP (or PRS resource) only if the measurement for the TRP (or PRS resource) fails. In this case, the higher node may interpret the absence of a measurement report for the specific TRP (or PRS resource) as information indicating the failure of the measurement for the TRP (or PRS resource).

The operations of the PRU UE based on information provided to the PRU for CPM-based positioning support may specify the time point and PRU where the PRU UE performs the measurement, thereby enabling UEs intending to obtain precise positioning information through CPM-based positioning to gain the benefits of phase error cancellation through differencing. If the operations of the PRU UE are not specified, the PRU may perform measurement based on an arbitrarily selected reception time point and TRP (or PRS), similar to the positioning method of the general UE. In this case, the reception time point and TRP (or PRS) selected by the UE may not match the reception time points and TRP (or PRS) selected by the UE that requires differencing support, which may be disadvantageous for improving positioning accuracy based on phase error cancellation.

**[Proposal 2] Reporting of measurement for PRU for CPM-based positioning support**

The present disclosure proposes a method where the PRU receives information related to CPM-based positioning support from the higher node (e.g., BS or LMF), performs the PRS reception operation based on the information, and then reports the results. Specifically, the proposed method may include proposals regarding configuration information for a measurement report. The measurement report may be transmitted through RRC or LPP information generated by the UE and transmitted to the higher node (e.g., BS or LMF).

CPM (Carrier Phase Measurement)

To support CPM-based positioning, information measured/reported by the UE may include the CPM values acquired by the UE through specific PRS(s). In this case, the CPM value may be determined based on a phase value measured by the UE and caused by a propagation delay between the transmitter and receiver based on a carrier frequency at which the PRS is transmitted. A form in which the CPM is expressed in the measurement report may be Phase of Arrival (POA) or Phase Difference of Arrival (PDOA). The POA refers to a phase caused by the propagation delay between the transmitter and receiver, which may be expressed as a value between 0 and 2π. A portion of the phase rotation caused by the propagation delay that exceeds 2π (i.e., a portion of the propagation delay expressed as an integer multiple of the carrier wavelength) is not included. For example, the value of a pure carrier phase caused by the propagation delay may be expressed by Equation 4. In Equation 4, $f_c$ represents the carrier frequency, $\tau_0$ represents the propagation delay between the transmitter and receiver, and mod(x, y) means performing a modulo operation of x with respect to y.

[Equation 4]

$$\phi = \mathrm{mod}\,(2\pi f_c * \tau_0,\ 2\pi)$$

The PDOA refers to a difference between the CPM measured from the PRS received from a reference TRP and the CPM measured from the PRS received from another TRP. The result of the PDOA in consideration of the pure carrier phase without accounting for error effects may be expressed as Equation 5. In Equation 5, $f_c$ represents the carrier frequency, $\tau_r$ and $\tau_t$ represent the propagation delays between the transmitter and receiver relative to the reference TRP and target TRP, respectively, and mod(x, y) means performing the modulo operation of x with respect to y.

[Equation 5]

$$\phi_D = \phi_t - \phi_r = \mathrm{mod}\,(2\pi f_c * \tau_r,\ 2\pi) - \mathrm{mod}\,(2\pi f_c * \tau_t,\ 2\pi)$$

Even without a specific request, the UE configured/instructed to perform the PRU function may always include the POA or PDOA value in the measurement report. This may be to support the higher node in receiving the effects of a propagation delay observed in the phase domain, to support precise positioning performance in CPM-based positioning.

Additional measurement for integer ambiguity resolution

When CPM-based positioning is performed, one of the major issues that needs to be addressed to ensure positioning performance is integer ambiguity. This integer ambiguity arises from ambiguity in distance caused by a propagation delay that is not observed in the phase domain. That is, the phase value has a range of 0 to 2π, and the actual distance capable of being distinguished through the range is limited by a wavelength determined by the carrier frequency, which leads to the issue. Considering commonly used solutions, additional information beyond CPM may be required to resolve the integer ambiguity. Considering the characteristics arising from CPM-based positioning, the proposed method may include the target of additional information reported by the PRU UE in addition to CPM, as well as a method of applying the information.

When the PRU UE performs measurement/reporting to support CPM-based positioning, additional information included in the measurement report may include the propagation delay between the BS and UE. For example, information about the propagation delay may include timing-based positioning measurements, such as ToA and Time Difference of Arrival (TDOA), which are already used in 3GPP NR. Alternatively, the information may include information on a propagation delay estimated based on the phase difference between subcarriers on which the PRS is received, such as subcarrier phase measurement (ScPM). Alternatively, the additional information included in the measurement report may include information in the angle domain where the BS transmits the PRS such as Angle of Departure (AoD) or information in the angle domain where the PRU UE receives the PRS such as Angle of Arrival (AoA). These pieces of information may be used to calculate information on a rough location of the PRU UE (i.e., information at a level relatively lower than the positioning resolution that may be expected from CPM-based positioning), which may be useful for the higher node in solving the integer ambiguity issue.

The additional information included in the measurement report proposed above may be configured such that the PRU UE reports the information only when specific conditions are met. Otherwise, the UE may not report the information (or the UE may be allowed to determine whether to report the information). The specific conditions may be determined according to one or more of the following options.

Option B-1) When one or more of the pieces of additional information mentioned above are indicated/requested by the higher node, the PRU UE may perform the indicated/requested measurement and report the results. This allows the higher node to request the information from the UE when needed to improve positioning accuracy, and when not needed, ensures that the PRU UE does not need to report the additional information, thereby reducing unnecessary overhead.

Option B-2) The reporting of the additional information may be determined based on the selection of the UE. This allows the UE to immediately reflect a situation when the UE detects a specific condition (e.g., a change in the location thereof or a deterioration in measurement performance) and provide additional information, thereby reducing a response time for the higher node to address positioning errors.

The proposed method reduces transmission of information with low utility compared to the transmission and allows the transmission only when necessary, thereby reducing the overhead of the measurement reports transmitted by the UE. The proposed method may be particularly useful when it is generally assumed that the location of the PRU UE is fixed, and thus changes in the integer ambiguity are nonexistent or minimal. Additionally, when specific situations arise, for example, when the location of the PRU is estimated for the first time or when there is a change in the information on the location of the PRU, the proposed method may resolve issues by adaptively allowing additional measurement reports.

**[Proposal 3] Capability and assistance information data for PRU UE to support CPM-based positioning**

Hereinafter, the capability of the PRU UE necessary to support CPM-based positioning will be defined. In addition, a method of applying the capabilities is also proposed.

Capability based on UE ability to handle TRP (or PRS resource)

The capability of the PRU UE may include the number of TRPs (or PRS resources) that the UE is capable of simultaneously measuring. Measurement information provided by a single PRU may be used to improve CPM-based positioning performance for multiple UEs. Considering that TRPs (or PRS resources) favorable for the UEs may vary, the more TRPs (or PRS resources) the PRU measures, the more advantageous it may be for ensuring stable CPM-based positioning performance. However, as the number of RSs that the UE is capable of simultaneously receiving and processing increases, the complexity of the implementation and power consumption of the UE may increase, which leads to potential constraints. Accordingly, the PRU UE may be defined to have the capability of the maximum number of TRPs (or PRS resources) that are capable of being simultaneously received and measured within a reference time, based on a single reference time. The capability for the number of TRPs (or PRS resources) may be divided into several levels, and the UE may report the capability to the higher node (e.g., BS or LMF). Based on the reported capability, the higher node may configure and provide configuration information to the UE to support CPM-based positioning. In this case, the UE may expect that based on the capability reported by the UE, the UE will not be required to process more TRPs (or PRS resources) than the reported capability within the single reference time. Alternatively, if more TRPs (or PRS resources) than the reported capability are configured, the UE may perform measurements for and report on TRPs (or PRS resources) smaller than or equal to the reported capability.

Assistance information data transmitted by UE

To support CPM-based positioning, the present disclosure proposes information that may be used as assistance information data provided by the PRU UE to the higher node. The assistance information data is a type of data that the UE transmits to the higher node, which refers to reference information provided by the UE in order to receive preferred configuration and indication information from the higher node. Upon receiving the information, the higher node may (re) configure (or change) and indicate appropriate configuration and indication information based on the received information, but this is not mandatory and may be determined based on the choice of the higher node. The methods proposed in the present disclosure are explained based on operation methods for the assistance information data. However, it may be understood by those who skilled in the art that as long as the idea of the present disclosure is maintained, the methods may also be applied when the UE provides information in a different way from the above-described operation method (e.g., explicit requests or reports related to capabilities).

The assistance information data transmitted by the PRU UE to the higher node may include a preferred value for the maximum number of TRPs (or PRS resources) that the PRU UE desires to simultaneously receive and measure within the single reference time. Considering the constraints such as the implementation complexity and power consumption of the PRU UE, the above operation may be to request the maximum number of TRPs (or PRS resource) that the UE is capable of simultaneously processing and to expect configuration information based on the request. A distinguishing feature from the proposed capability is that transmission of the information on the preferred value of the maximum number of TRPs (or PRS resources) through the assistance information data allows for adaptive changes and requests depending on the situation, such as the UE battery capacity, thereby providing the benefit of flexibility.

The assistance information data transmitted by the PRU UE to the higher node may include preferred information regarding a periodic time duration (e.g., an MG, a PPW, or similar time duration concepts capable of being used for CPM purposes) configured for the PRU UE to perform measurement. Specifically, the preferred information regarding the periodic time duration may include a periodicity at which the time duration occurs and/or the length of a duration for which each time duration is maintained. Additionally, the preferred information regarding the periodic time duration may include information on a preferred time duration from a set of preconfigured multiple time durations. This is advantageous in that the preferred information allows the PRU UE to be configured with an appropriate time duration based on the situation thereof such as a battery status.

The assistance information data transmitted by the PRU UE to the higher node may include information on the addition or removal of a TRP (or PRS resource) from the measurement target for the PRU UE. This may be applied in situations where the PRU UE is already configured/provided with a list of measurement target TRPs (or PRS resources). Specifically, if the UE successfully discovers a new TRP (or PRS resource) that ensures good reception performance, or if there is a TRP (or PRS resource) with significantly degraded measurement performance, the performance of CPM-based positioning may be improved by adding or removing the TRP (or PRS resource) from the list.

FIG. 12 is a diagram for explaining operations of a UE and a network according to an embodiment. In FIG. 12, the network may include multiple network nodes (e.g., BS/TRPs and LMF server). For convenience of explanation, the term "LMF" used here may be replaced with other terms. FIG. 12 serves as an implementation example for the proposals mentioned above, and the previously explained details may be referenced to aid in understanding FIG. 12.

Referring to FIG. 12, the UE supporting a PRU (hereinafter referred to as the PRU UE) transmits a UE capability report to the network, wherein UE capability report informs that the PRU UE is able to operate as the PRU that provides a reference position for positioning (1205).

The network may transmit PRU-related configuration information to the PRU UE (1211). The PRU-related configuration information may include configuration information regarding measurement to be performed by the PRU UE as the PRU. The location of the PRU UE may be known to the network.

Additionally, the network may transmit configuration information regarding measurement to be performed by a positioning target UE (1210).

The configuration information on the measurement to be performed by the target UE and the configuration information on the measurement to be performed by the PRU UE as the PRU may share at least some of a CPM measurement time duration and/or a CPM measurement target RS resource set.

The network may transmit a positioning-related RS (e.g., PRS) (1215).

The PRU UE may perform measurement of the positioning-related RS as the PRU (1220). The measurement of the PRU may include CPM for positioning of a target UE. The measurement of the PRU may include a different type of measurement from the CPM. The different type of measurement may be related to at least one of ToA, TDOA, ScPM, AoD, or AoA.

The PRU UE may report the measurement of the PRU to the network (1230). The PRU UE performs measurement reporting for all RS resources included in the configuration information (1211). In this case, the measurement report for all the RS resources may include information on an RS resource where a measurement failure occurs. The information on the RS resource where the measurement failure occurs may include at least one of a measurement failure indication and a measurement failure cause. The measurement report for all the RS resources may include phase measurement values for remaining RS resources except for the RS resource where the measurement failure occurs. Each phase measurement value may be expressed as mod ($2\pi fc\ \tau 0$, $2\pi$), where fc denotes a carrier frequency, $\tau 0$ denotes a propagation delay of an RS, and mod denotes a modulo operation.

The target UE may perform measurement of a positioning-related RS as the target UE (1225). The target UE may transmit a measurement report to the network (1235). The target UE performs a measurement report for at least some of the RS resources included in the configuration information (1210). In this case, a measurement report for the RS resource where the measurement failure occurs may be omitted.

The measurement of the PRU may be used to correct errors in the measurement for the target UE.

FIG. 13 is a diagram for explaining operations of a first device according to an embodiment.

Referring to FIG. 13, the first device transmits, to a network, device capability information for informing that the first device can operate as a PRU that provides a reference position for positioning (A05).

The first device may receive configuration information regarding measurement to be performed by the first device as the PRU (A10).

The first device may report the measurement of the PRU performed based on the configuration information to the network (A15). Based on that the first device operates as the PRU, measurement reporting may be performed for all the RS resources included in the configuration information. The measurement report for all the RS resources may include information on an RS resource where a measurement failure occurs.

The information on the RS resource where the measurement failure occurs may include at least one of a measurement failure indication and a measurement failure cause.

The measurement report for all the RS resources may include phase measurement values for remaining RS resources except for the RS resource where the measurement failure occurs. Each phase measurement value may be expressed as mod ($2\pi fc\ \tau 0$, $2\pi$), where fc denotes a carrier frequency, $\tau 0$ denotes a propagation delay of an RS, and mod denotes a modulo operation.

The configuration information may include information regarding a measurement time duration of the PRU and information regarding a resource set for all the RS resources.

The measurement of the PRU may include CPM for positioning of a target UE.

A location of the PRU may be known to the network, and the CPM of the PRU may be related to correction of a CPM error of the target UE.

The measurement of the PRU may further include a different type of measurement from the CPM. The different type of measurement may be related to at least one of ToA, TDOA, ScPM, AoD, or AoA.

The RS resources may be DL PRS resources.

The first device may be a UE.

FIG. 14 is a diagram for explaining operations of a second device according to an embodiment.

Referring to FIG. 14, the second device receives, from a first device, device capability information informing that the first device can operate as a PRU that provides a reference position for positioning (B05).

The second device transmits configuration information regarding measurement to be performed by the first device as the PRU (B10).

The second device may receive a measurement report of the PRU performed based on the configuration information from the first device (B15). The measurement report of the PRU may include measurement results for all RS resources included in the configuration information. The measurement results for all the RS resources may include information on an RS resource where a measurement failure occurs.

The information on the RS resource where the measurement failure occurs may include at least one of a measurement failure indication and a measurement failure cause.

The measurement results for all the RS resources may include phase measurement values for remaining RS resources except for the RS resource where the measurement failure occurs. Each phase measurement value may be expressed as mod ($2\pi fc\ \tau 0$, $2\pi$), where fc denotes a carrier frequency, $\tau 0$ denotes a propagation delay of an RS, and mod denotes a modulo operation.

The configuration information may include information regarding a measurement time duration of the PRU and information regarding a resource set for all the RS resources.

The measurement of the PRU may include CPM for positioning of a target UE.

A location of the PRU may be known to the second device, and the CPM of the PRU may be related to correction of a CPM error of the target UE.

The measurement of the PRU may further include a different type of measurement from the CPM. The different type of measurement may be related to at least one of ToA, TDOA, ScPM, AoD, or AoA.

The RS resources may be DL PRS resources.

The second device may include at least one network node (e.g., BS/TRP and/or LMF) in a wireless communication system.

FIG. 15 illustrates a communication system 1 applied to the present disclosure.

Referring to FIG. 15, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 16 illustrates wireless devices applicable to the present disclosure.

Referring to FIG. 16, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 15.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In an embodiment of the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In an embodiment of the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 17 illustrates another example of a wireless device applied to the present disclosure. The wireless device may be implemented in various forms according to a use-case/service (refer to FIG. 15).

Referring to FIG. 17, wireless devices 100 and 200 may correspond to the wireless devices 100 and 200 of FIG. 16 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 16. For example, the transceiver(s) 114 may include the one or more transceivers 106 and 206 and/or the one or more antennas 108 and 208 of FIG. 16. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 15), the vehicles (100b-1 and 100b-2 of FIG. 15), the XR device (100c of FIG. 15), the hand-held device (100d of FIG. 15), the home appliance (100e of FIG. 15), the IoT device (100f of FIG. 15), a digital broadcast terminal, a hologram device, a public safety device, an MTC device, a medicine device, a fintech device (or a finance device), a security device, a climate/environment device, the AI server/device (400 of FIG. 15), the BSs (200 of FIG. 15), a network node, etc. The wireless device may be used in a mobile or fixed place according to a use-example/service.

In FIG. 17, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 18 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 18, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 17, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

The above-described embodiments correspond to combinations of elements and features of the present disclosure in prescribed forms. And, the respective elements or features may be considered as selective unless they are explicitly mentioned. Each of the elements or features may be implemented in a form failing to be combined with other elements or features. Moreover, it is able to implement an embodiment of the present disclosure by combining elements and/or features together in part. A sequence of operations explained for each embodiment of the present disclosure may be modified. Some configurations or features of one embodiment may be included in another embodiment or may be substituted for corresponding configurations or features of another embodiment. And, an embodiment may be configured by combining claims failing to have relation of explicit citation in the appended claims together or may be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

## INDUSTRIAL APPLICABILITY

The present disclosure is applicable to UEs, BSs, or other apparatuses in a wireless mobile communication system.

## Claims

**1.** A method of performing positioning-related measurement by a first device in a wireless communication system, the method comprising:

transmitting, to a network, device capability information for informing that the first device can operate as a positioning reference unit (PRU) that provides a reference position for positioning;
receiving configuration information regarding measurement to be performed by the first device as the PRU; and
reporting the measurement of the PRU performed based on the configuration information to the network,
wherein based on that the first device operates as the PRU:

measurement reporting is performed for all reference signal resources included in the configuration information; and
the measurement reporting for all the reference signal resources comprises information regarding a reference signal resource where a measurement failure occurs.

**2.** The method of claim 1, wherein the information regarding the reference signal where the measurement failure occurs comprises at least one of a measurement failure indication and a measurement failure cause.

**3.** The method of claim 2, wherein the measurement reporting for all the reference signal resources comprises phase measurement values for remaining reference signal resources except for the reference signal resource where the measurement failure occurs.

**4.** The method of claim 3, wherein each phase measurement value is expressed as mod ($2\pi fc\ \tau 0$, $2\pi$), where fc denotes a carrier frequency, $\tau 0$ denotes a propagation delay of a reference signal, and mod denotes a modulo operation.

**5.** The method of claim 1, wherein the configuration information comprises information regarding a measurement time duration of the PRU and information regarding a resource set for all the reference signal resources.

**6.** The method of claim 1, wherein the measurement of the PRU comprises carrier phase measurement (CPM) for positioning of a target user equipment (UE).

**7.** The method of claim 6, wherein a location of the PRU is known to the network, and
wherein the CPM of the PRU is related to correction of a CPM error of the target UE.

**8.** The method of claim 6, wherein the measurement of the PRU further comprises a different type of measurement from the CPM, and
wherein the different type of measurement is related to at least one of Time of Arrival (ToA), Time Difference of Arrival (TDOA), Subcarrier Phase Measurement (ScPM), Angle of Departure (AoD), or Angle of Arrival (AoA).

**9.** The method of claim 1, wherein the reference signal resources are downlink positioning reference signal (PRS) resources, and
wherein the first device is a user equipment (UE).

**10.** A processor-readable recording medium having recorded thereon a program for executing the method of claim 1.

**11.** A first device for wireless communication, the first device comprising:

a memory configured to store instructions; and
a processor configured to perform operations by executing the instructions,
wherein the operations of the processor comprise:

transmitting, to a network, device capability information for informing that the first device can operate as a positioning reference unit (PRU) that provides a reference position for positioning;
receiving configuration information regarding measurement to be performed by the first device as the PRU; and
reporting the measurement of the PRU performed based on the configuration information to the network,
wherein based on that the first device operates as the PRU:

measurement reporting is performed for all reference signal resources included in the configuration information; and
the measurement reporting for all the reference signal resources comprises information regarding a reference signal resource where a measurement failure occurs.

**12.** The first device of claim 11, further comprising:

a transceiver,
wherein the first device is a user equipment (UE) operating in a wireless communication system.

**13.** The first device of claim 11, wherein the first device is a processing device configured to control a user equipment (UE) operating in a wireless communication system.

**14.** A method of receiving, by a second device, a measurement report from a first device in a wireless communication system, the method comprising:

receiving, from the first device, device capability information informing that the first device can operate as a positioning reference unit (PRU) that provides a reference position for positioning;
transmitting configuration information regarding measurement to be performed by the first device as the PRU; and
receiving a measurement report of the PRU performed based on the configuration information from the first device,
wherein the measurement report of the PRU comprises measurement results for all reference signal resources included in the configuration information, and
wherein the measurement results for all the reference signal resources comprise information regarding a reference signal resource where a measurement failure occurs.

**15.** A second device for wireless communication, the second device comprising:

a memory configured to store instructions; and
a processor configured to perform operations by executing the instructions,
wherein the operations of the processor comprise:

receiving, from a first device, device capability information informing that the first device can operate as a positioning reference unit (PRU) that provides a reference position for positioning;
transmitting configuration information regarding measurement to be performed by the first device as the PRU; and
receiving a measurement report of the PRU performed based on the configuration information from the first device,
wherein the measurement report of the PRU comprises measurement results for all reference signal resources included in the configuration information, and
wherein the measurement results for all the reference signal resources comprise information regarding a reference signal resource where a measurement failure occurs.

FIG. 1

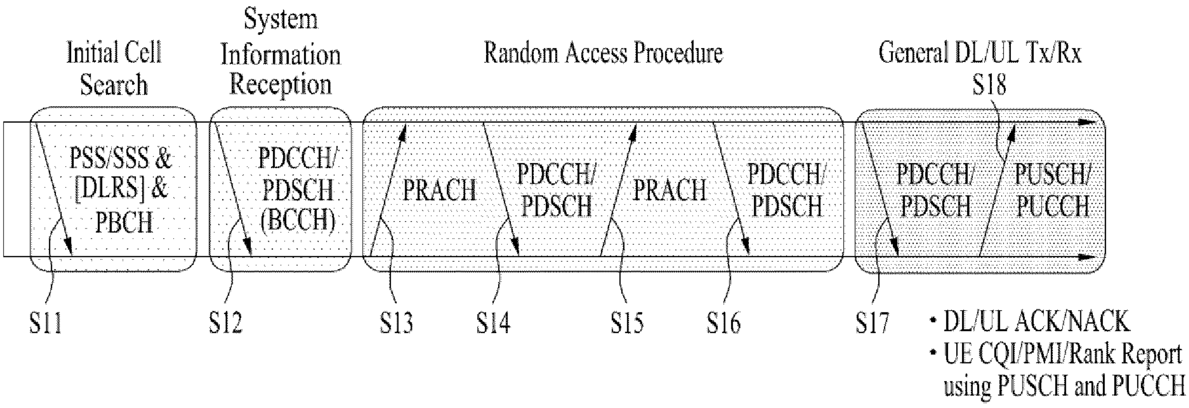


FIG. 2

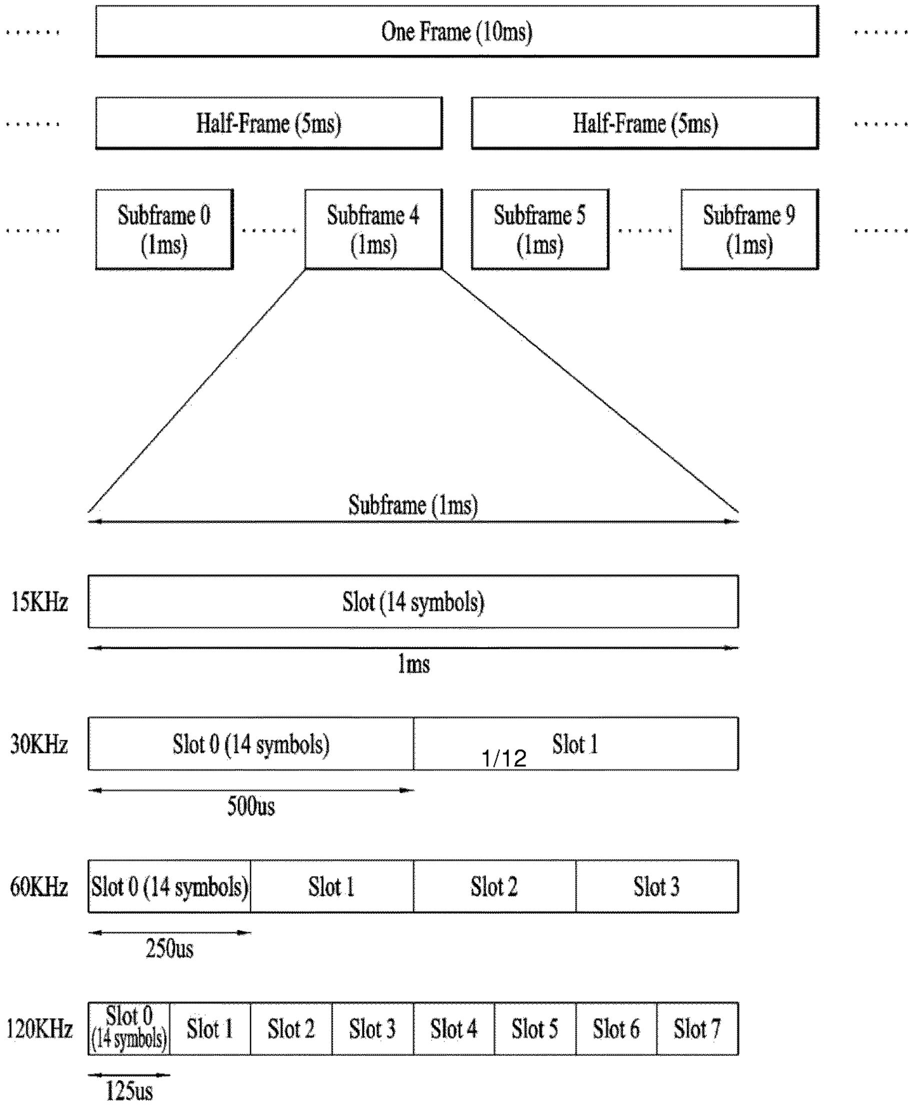


1/12

FIG. 3

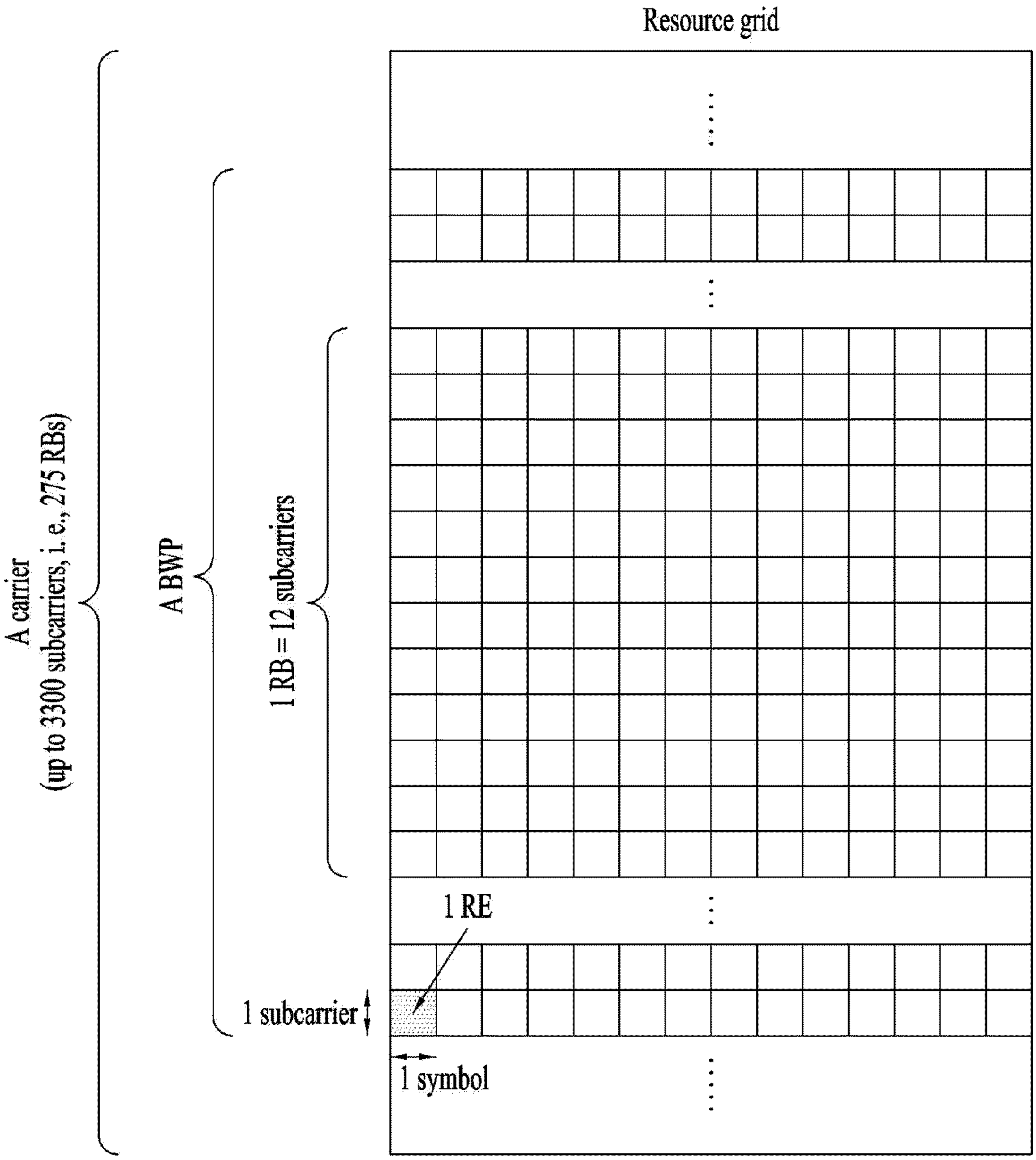
Resource grid
A carrier
(up to 3300 subcarriers, i. e., 275 RBs)
A BWP
1 RB = 12 subcarriers
1 RE
1 subcarrier
1 symbol

FIG. 4

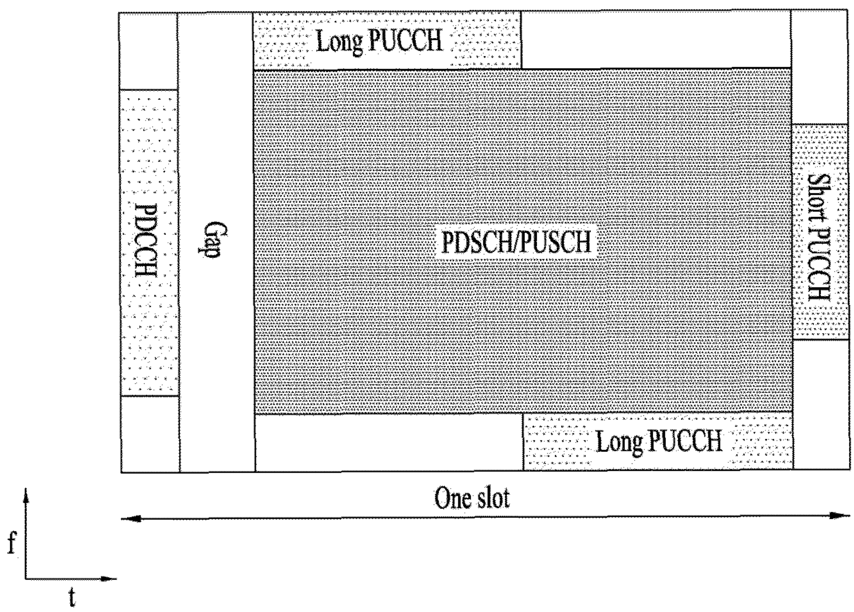
Long PUCCH
PDCCH
Gap
PDSCH/PUSCH
Short PUCCH
Long PUCCH
One slot
f
t

FIG. 5

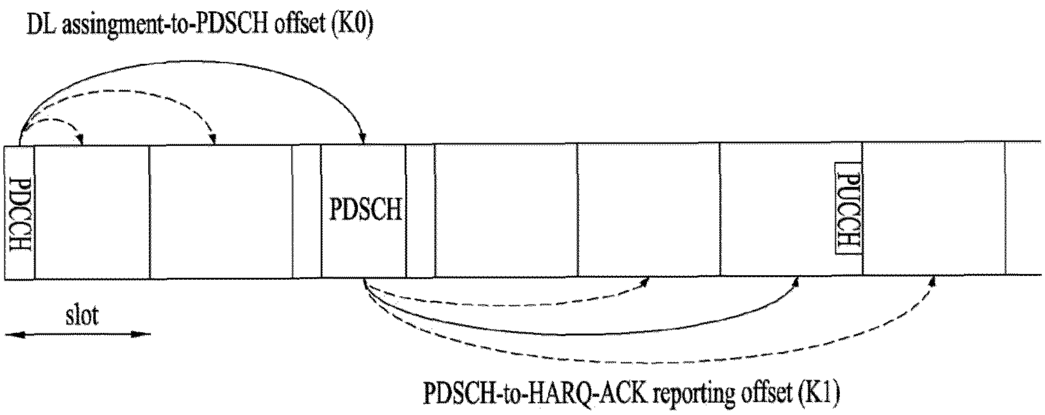
DL assingment-to-PDSCH offset (K0)
PDCCH
PDSCH
PUCCH
slot
PDSCH-to-HARQ-ACK reporting offset (K1)

FIG. 6

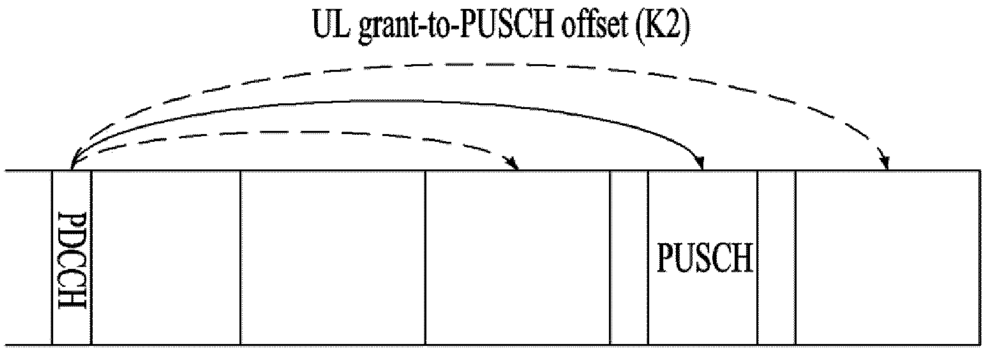
UL grant-to-PUSCH offset (K2)
PDCCH
PUSCH

FIG. 7

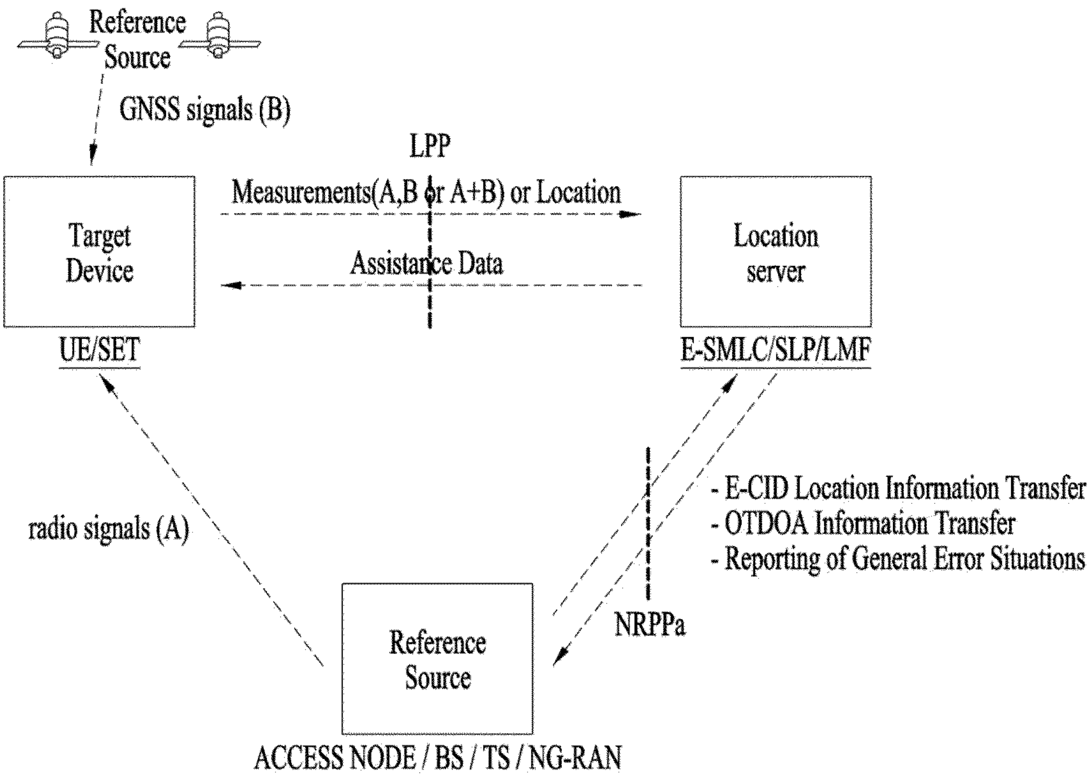
Reference Source
GNSS signals (B)
LPP
Measurements(A,B or A+B) or Location
Assistance Data
Target Device
UE/SET
Location server
E-SMLC/SLP/LMF
radio signals (A)
- E-CID Location Information Transfer
- OTDOA Information Transfer
- Reporting of General Error Situations
NRPPa
Reference Source
ACCESS NODE / BS / TS / NG-RAN

FIG. 8

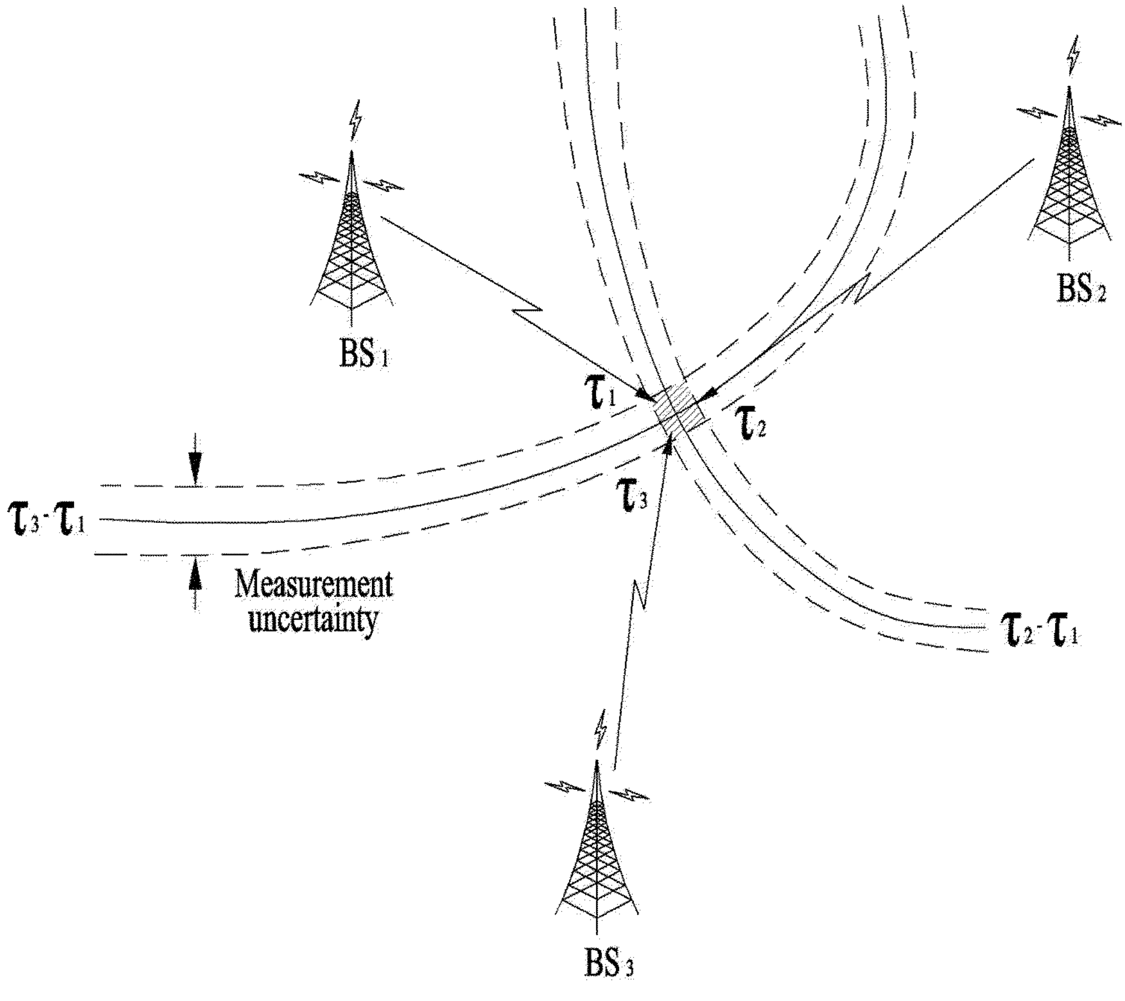

# FIG. 9

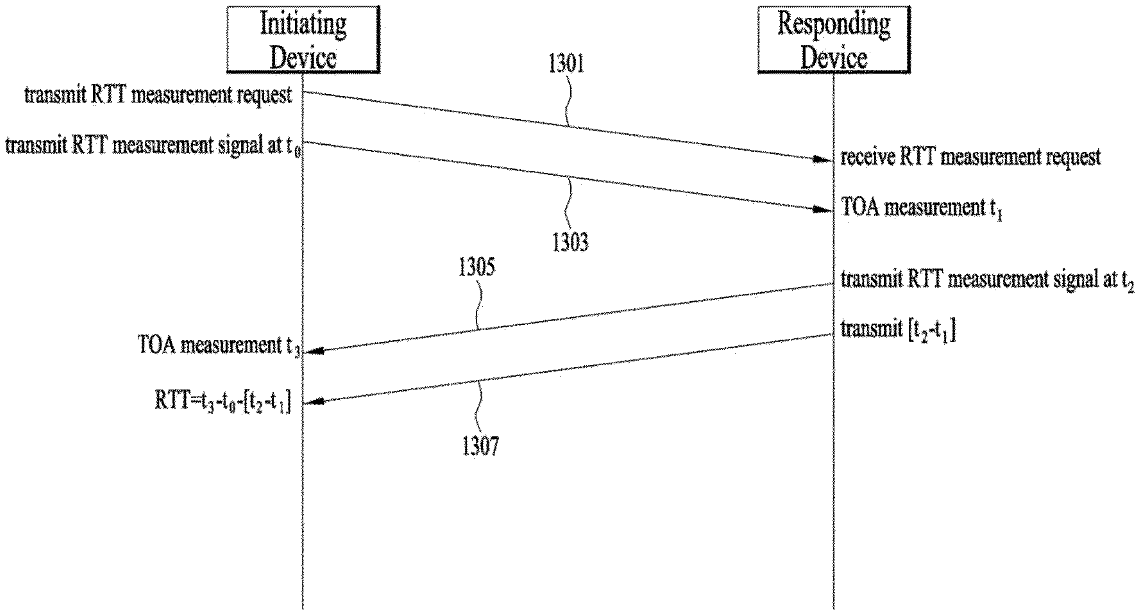
Initiating Device
Responding Device
1301
transmit RTT measurement request
transmit RTT measurement signal at $t_0$
receive RTT measurement request
TOA measurement $t_1$
1303
1305
transmit RTT measurement signal at $t_2$
transmit $[t_2-t_1]$
TOA measurement $t_3$
RTT=$t_3-t_0-[t_2-t_1]$
1307

(a)

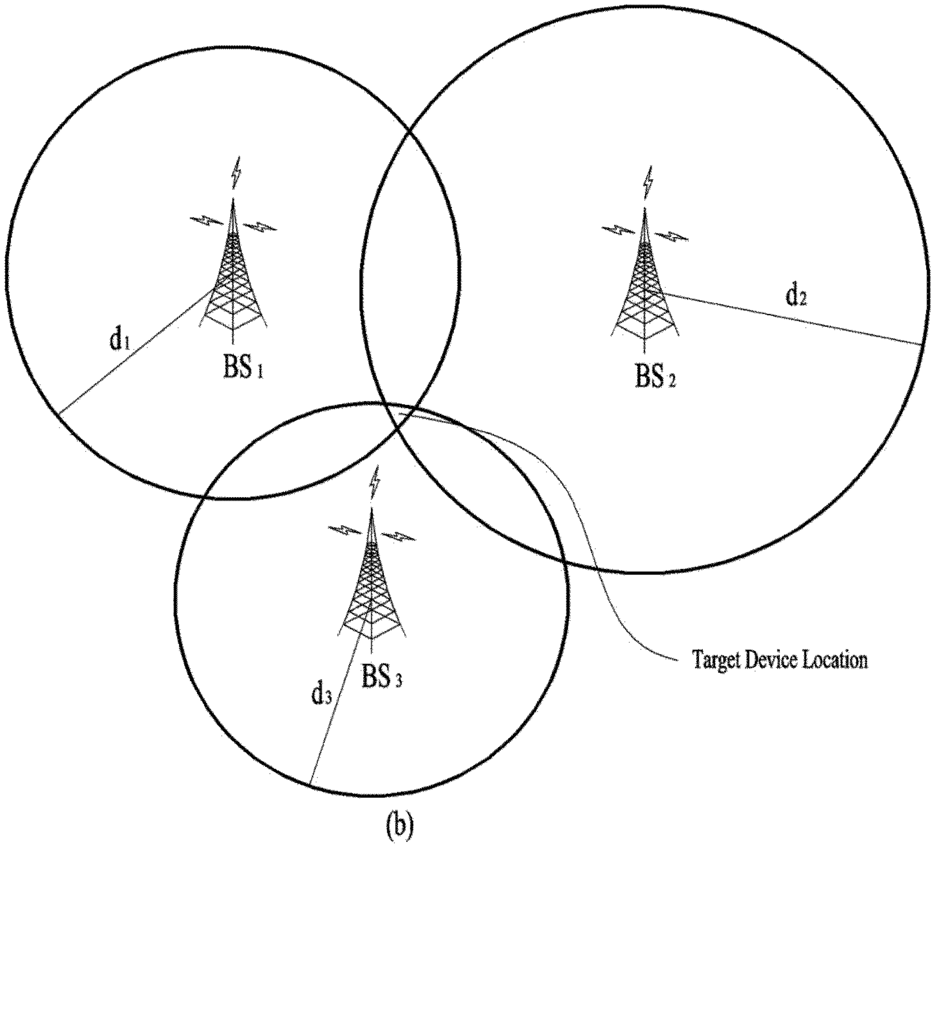
$d_1$
$BS_1$
$d_2$
$BS_2$
$d_3$
$BS_3$
Target Device Location

(b)

# FIG. 10

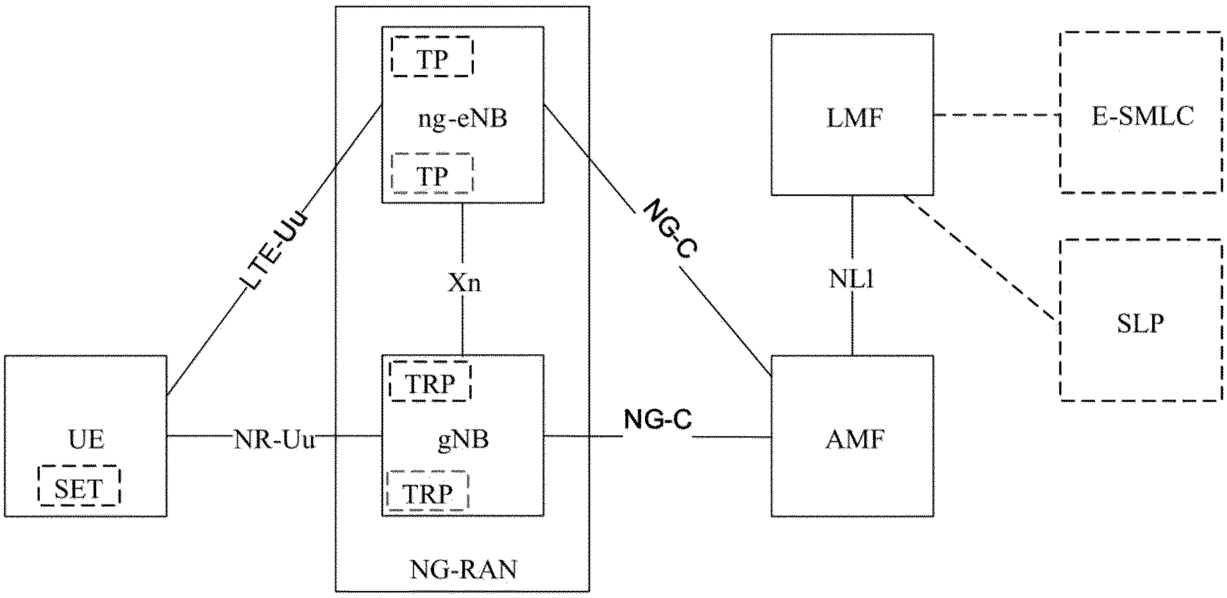
TP
ng-eNB
TP
LMF
E-SMLC
LTE-Uu
NG-C
Xn
NL1
SLP
TRP
UE
NR-Uu
gNB
NG-C
AMF
SET
TRP
NG-RAN

FIG. 11

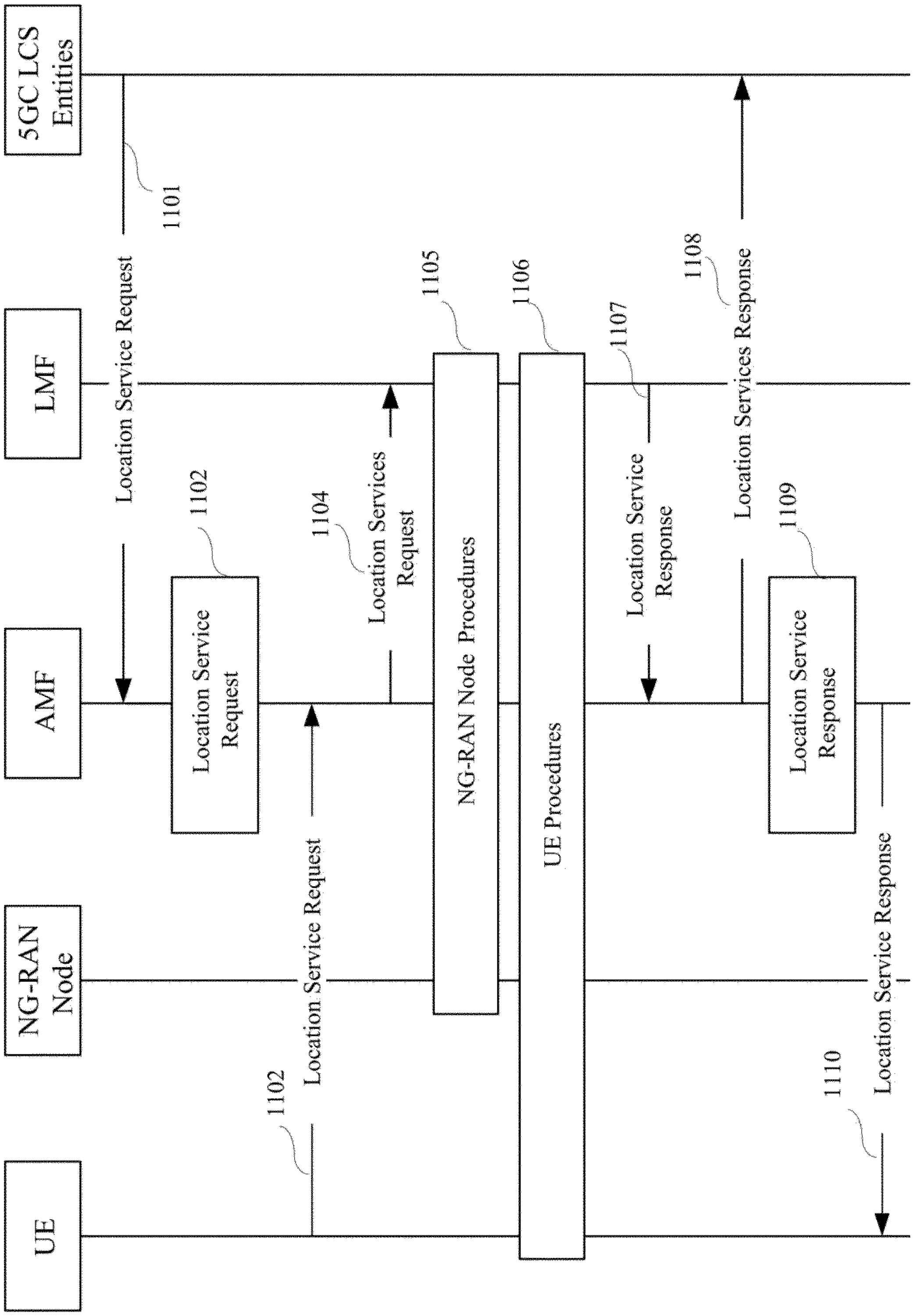
5GC LCS Entities
LMF
AMF
NG-RAN Node
UE
1101
Location Service Request
1102
Location Service Request
1102
Location Service Request
1104
Location Services Request
1105
NG-RAN Node Procedures
1106
UE Procedures
1107
Location Service Response
1108
Location Services Response
1109
Location Service Response
1110
Location Service Response

FIG. 12

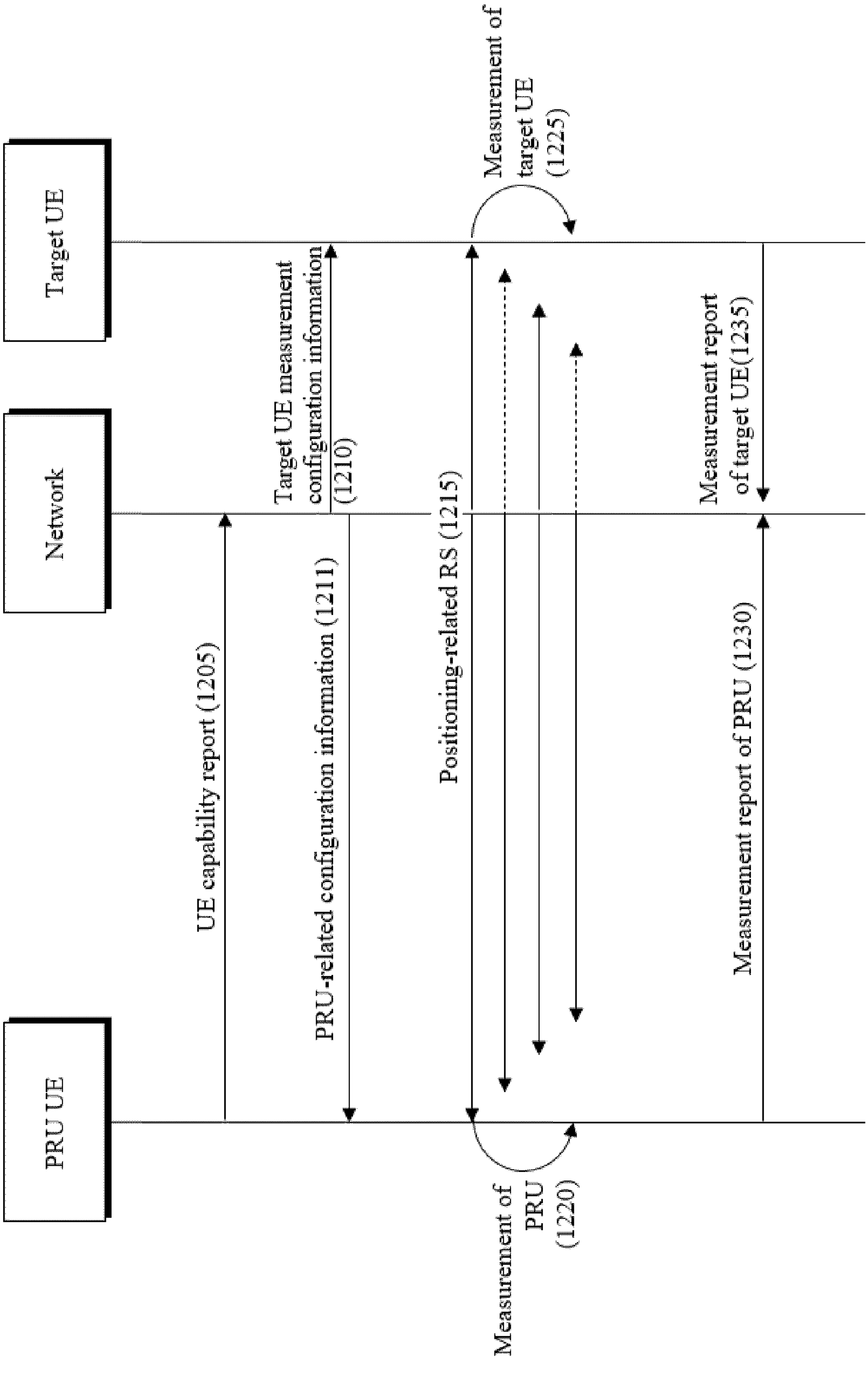

PRU UE
Network
Target UE
UE capability report (1205)
PRU-related configuration information (1211)
Target UE measurement configuration information (1210)
Positioning-related RS (1215)
Measurement of PRU (1220)
Measurement of target UE (1225)
Measurement report of PRU (1230)
Measurement report of target UE(1235)

FIG. 13

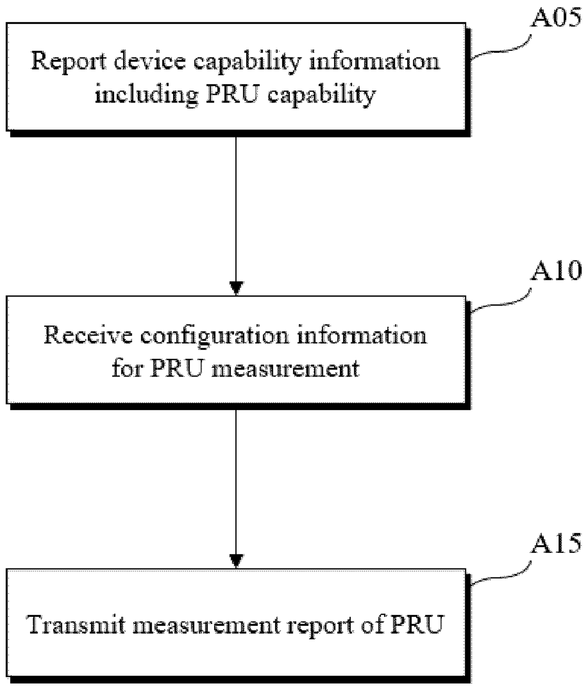
A05
Report device capability information including PRU capability
A10
Receive configuration information for PRU measurement
A15
Transmit measurement report of PRU

FIG. 14

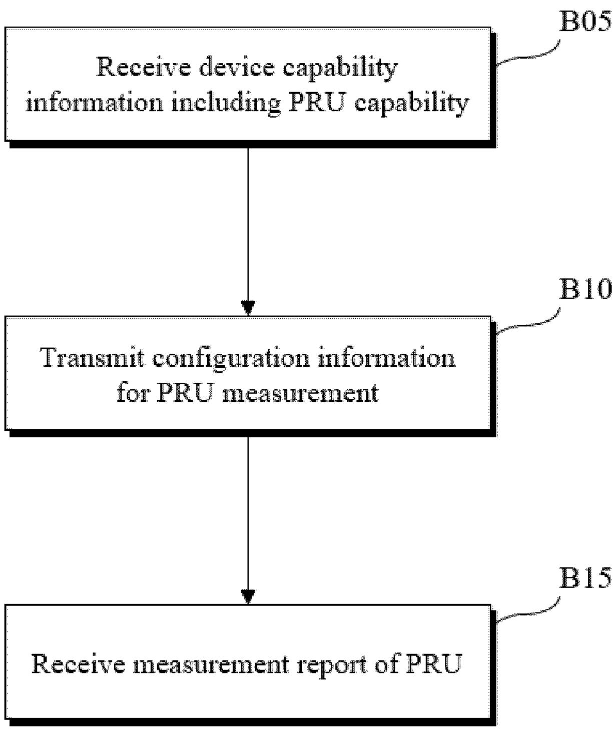
B05
Receive device capability information including PRU capability
B10
Transmit configuration information for PRU measurement
B15
Receive measurement report of PRU

FIG. 15

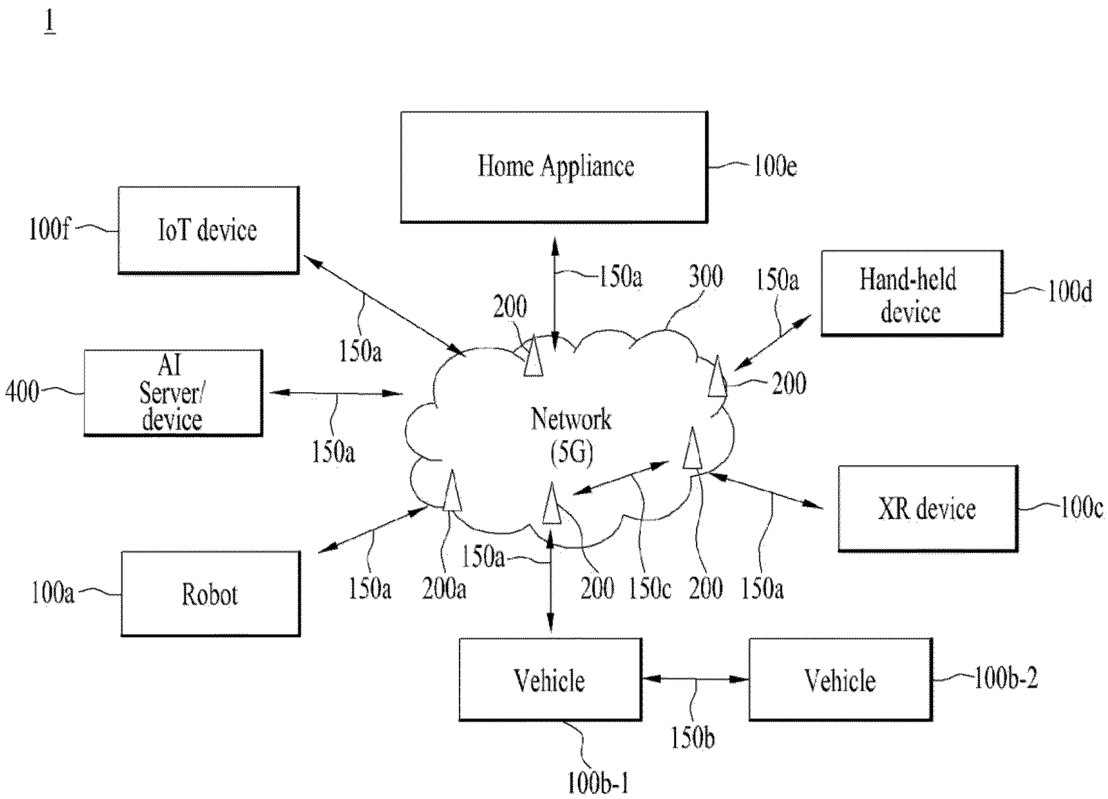
1
Home Appliance
100e
IoT device
100f
150a
300
150a
Hand-held device
100d
200
150a
AI Server/ device
400
150a
200
Network (5G)
XR device
100c
150a
Robot
100a
150a
200a
200
150c
200
150a
Vehicle
Vehicle
100b-2
150b
100b-1

FIG. 16

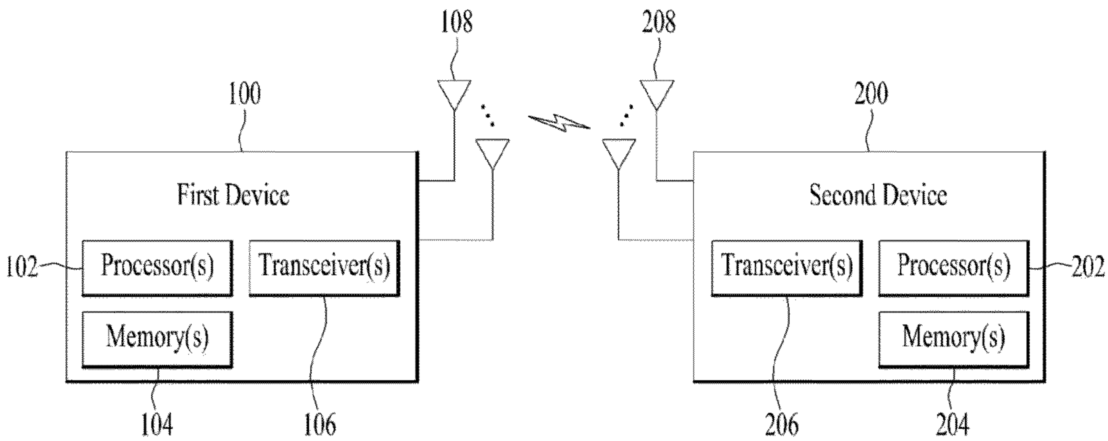
108
208
100
200
First Device
Second Device
102
Processor(s)
Transceiver(s)
Transceiver(s)
Processor(s)
202
Memory(s)
Memory(s)
104
106
206
204

FIG. 17

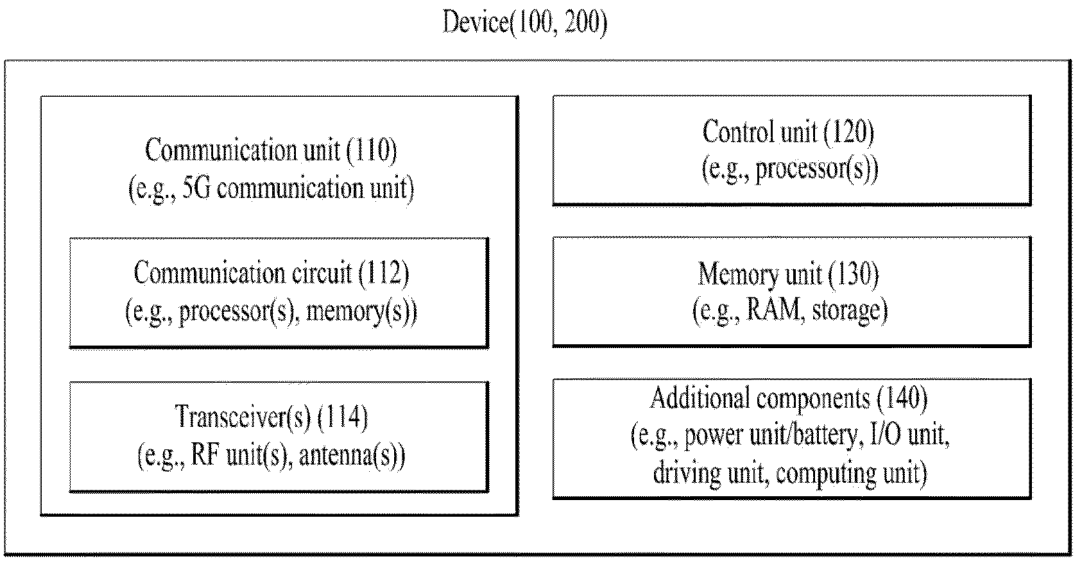
Device(100, 200)
Communication unit (110)
(e.g., 5G communication unit)
Communication circuit (112)
(e.g., processor(s), memory(s))
Transceiver(s) (114)
(e.g., RF unit(s), antenna(s))
Control unit (120)
(e.g., processor(s))
Memory unit (130)
(e.g., RAM, storage)
Additional components (140)
(e.g., power unit/battery, I/O unit,
driving unit, computing unit)

FIG. 18

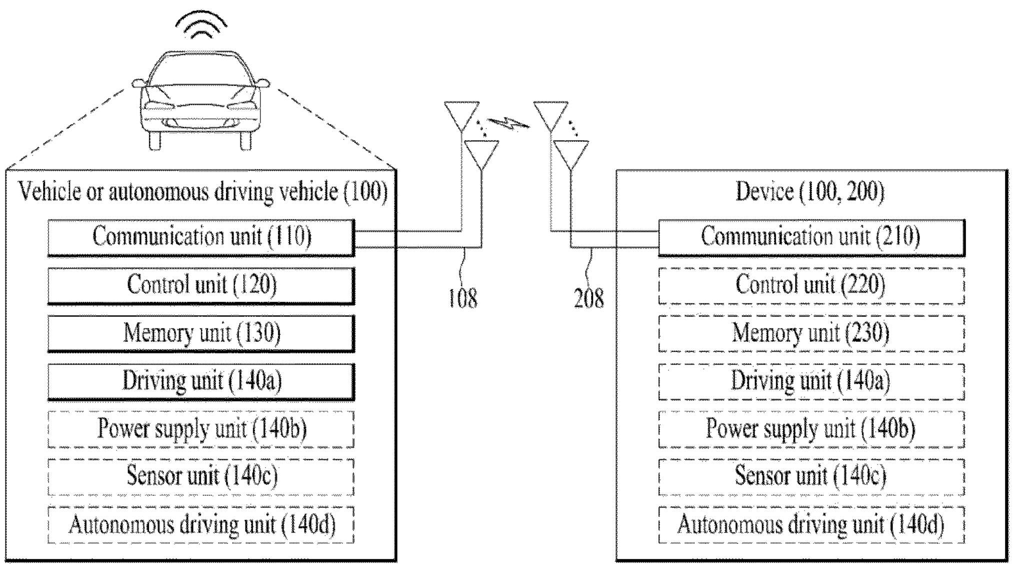
Vehicle or autonomous driving vehicle (100)
Communication unit (110)
Control unit (120)
Memory unit (130)
Driving unit (140a)
Power supply unit (140b)
Sensor unit (140c)
Autonomous driving unit (140d)
108
208
Device (100, 200)
Communication unit (210)
Control unit (220)
Memory unit (230)
Driving unit (140a)
Power supply unit (140b)
Sensor unit (140c)
Autonomous driving unit (140d)

## INTERNATIONAL SEARCH REPORT

International application No.
**PCT/KR2023/015020**

**A. CLASSIFICATION OF SUBJECT MATTER**

**H04W 64/00**(2009.01)i; **H04L 5/00**(2006.01)i; **H04W 8/24**(2009.01)i; **H04W 24/08**(2009.01)i; **H04B 17/20**(2015.01)i

According to International Patent Classification (IPC) or to both national classification and IPC

**B. FIELDS SEARCHED**

Minimum documentation searched (classification system followed by classification symbols)

H04W 64/00(2009.01); G01S 5/06(2006.01); H04W 4/02(2009.01); H04W 56/00(2009.01); H04W 84/18(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 포지셔닝(positioning), PRU, 능력 정보(capability information), 설정(configuration), 측정(measurement), 참조 신호 자원(reference signal resource), 실패(failure)

**C. DOCUMENTS CONSIDERED TO BE RELEVANT**

| Category* | Citation of document, with indication, where appropriate, of the relevant passages | Relevant to claim No. |
|---|---|---|
| A | CATT. [AT115-e][610][POS] PRUs (CATT). R2-2108940, 3GPP TSG RAN WG2 Meeting #115 electronic. [Online]. 30 August 2021. See pages 13 and 19. | 1-15 |
| A | INTEL CORPORATION. Running 38.305 CR for Positioning WI on RAT dependent positioning methods. R2-2111636, 3GPP TSG RAN WG2 Meeting #116-e. [Online]. 19 November 2021. See page 19. | 1-15 |
| A | WO 2022-155050 A1 (QUALCOMM INCORPORATED) 21 July 2022 (2022-07-21) See paragraphs [0182]-[0185]; and figure 16. | 1-15 |
| A | WO 2022-161404 A1 (MEDIATEK INC.) 04 August 2022 (2022-08-04) See pages 15-16; and figures 12-14. | 1-15 |
| A | CN 105517149 B (GUO HUA PHOTOELECTRICITY RESEARCH INSTITUTE OF SHENZHEN et al.) 26 October 2018 (2018-10-26) See claims 1-7. | 1-15 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 January 2024** | **11 January 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2023/015020**

| Patent document cited in search report | Publication date (day/month/year) | Patent family member(s) | Publication date (day/month/year) |
|---|---|---|---|
| WO 2022-155050 A1 | 21 July 2022 | CN 116711334 A | 05 September 2023 |
| | | KR 10-2023-0130002 A | 11 September 2023 |
| | | TW 202231101 A | 01 August 2022 |
| WO 2022-161404 A1 | 04 August 2022 | CN 116783954 A | 19 September 2023 |
| | | EP 4268522 A1 | 01 November 2023 |
| CN 105517149 B | 26 October 2018 | CN 105517149 A | 20 April 2016 |

Form PCT/ISA/210 (patent family annex) (July 2022)